# EUROPEAN PATENT SPECIFICATION

(11) **EP 4 198 097 B1**
(45) Date of publication and mention of the grant of the patent: **29.05.2024**
(21) Application number: 22211039.7
(22) Date of filing: 02.12.2022
(51) Int. Cl.: C09D 11/101, C09D 11/104, C09D 11/40, C09D 11/322

(54) **IMAGE FORMING METHOD AND ACTIVE ENERGY RAY-CURABLE COMPOSITION SET**
BILDERZEUGUNGSVERFAHREN UND SATZ AUS AKTIVENERGIESTRAHLENHÄRTBARER ZUSAMMENSETZUNG
PROCÉDÉ DE FORMATION D'IMAGE ET ENSEMBLE DE COMPOSITIONS DURCISSABLES PAR RAYONNEMENT D'ÉNERGIE ACTIVE

(30) Priority: 15.12.2021 JP 2021203712
(43) Date of publication of application: 21.06.2023
(73) Proprietor: Ricoh Company, Ltd., Tokyo 143-8555 (JP)
(72) Inventor: FUJITA, Yuusuke, Tokyo 143-8555 (JP); KOJIMA, Satoshi, Tokyo 143-8555 (JP); ISHII, Hikaru, Tokyo 143-8555 (JP)
(74) Representative: Marks & Clerk LLP

(56) References cited:
- EP-A1- 2 055 757
- EP-A1- 3 321 335
- JP-A- 2017 155 240
- JP-A- 2020 186 372
- KR-A- 20140 076 483

## Description

### BACKGROUND

### Technical Field

The present disclosure relates to an image forming method and an active energy ray-curable composition set.

### Related Art

Inkjet printers have been increasingly used in industrial applications including printing of large advertisements, printing on wallpaper, as well as printing on packages, and printing on beverage containers. Also, applications of inkjet printers have become diversified. Specific examples of ink compositions used in inkjet printers include, but are not limited to, water-based inkjet ink compositions, oil-based inkjet ink compositions, and active energy ray-curable inkjet ink compositions.

Since an active energy ray-curable composition is cured by irradiation with an active energy ray, the composition is also excellent in dryness on an impermeable base.

In particular, as applications of active energy ray-curable compositions are diversified, there have been a wide range of types of bases on which active energy ray-curable compositions are applied. Specific examples of bases include, but are not limited to, plastic, metal, and glass. In recent years, there has been a growing demand for e.g. active energy ray-curable compositions excellent in adhesiveness for these bases and dryness.

A cured object obtained by curing an active energy ray-curable composition after printing should also have durability against treatment under extremely severe conditions.

For example, in dietary applications such as beverage containers, containers are sometimes treated with e.g. hot water and alkaline solutions in terms of e.g. sterilization of containers. Thus, a cured object obtained by curing an active energy ray-curable composition after printing should have durability against treatment with e.g. hot water and an alkaline solution.

Furthermore, the cured object should also have scratch resistance during immersion in e.g. hot water and an alkaline solution, because when treated with e.g. hot water and alkaline solution, containers may rub against each other.

Regarding these problems, for example, as an inkjet ink composition that has sufficient adhesiveness for metals and can provide a resin-coated metal plate having a resin film with excellent strength, for example, there has been a proposed inkjet ink composition which contains a polymerizable monomer polymerizable by an active energy ray and a photopolymerization initiator, in which the polymerizable monomer contains 0.5 to 13% by mass of a polymerizable phosphoric ester compound with a molecule having a phosphoric ester group and an ethylenic double bond group and 10 to 75% by mass of a monofunctional monomer with a molecule having one ethylenic double bond group and having no phosphoric ester group, the photopolymerization initiator includes an acylphosphine oxide-based initiator and an α-hydroxyketone-based initiator having one or less phenyl group in its backbone, and the inkjet ink composition has a viscosity of 3 to 50 mPa·s at 25°C (e.g. see Japanese Unexamined Patent Application Publication No. 2012-162615).

Also, as an energy curable ink and coating having improved adhesiveness to flexible bases such as flexible films, for example, there has been a proposed energy-curable printing ink or coating composition that includes a monomer having an acrylate group, an oligomer having an acrylate group, or a combination thereof, and has an acrylate group-relative concentration exceeding 4.0 (e.g. see Japanese Unexamined Patent Application Publication No. 2015-513601).

Furthermore, as an active energy ray-curable composition that forms a high-hardness coating film with good base adhesiveness, there has been a proposed active energy ray-curable composition containing (A) an N-substituted (meth)acryl amide, (B) and (C) bifunctional (meth)acrylates, (D) a trifunctional or tetrafunctional (meth)acrylate, (E) a phosphoric acid (meth)acrylate, and (F) an acylphosphine photopolymerization initiator, which have a particular structure (e.g. see Japanese Unexamined Patent Application Publication No. 2020-186372).

For another example, as a laminate excellent in appearance, wear resistance, scratch resistance, base adhesiveness, heat resistance, moist heat resistance, and weather resistance and causing no cracking and peeling, there has been a proposed active energy ray-curable composition for forming a hard coat layer curable by an active energy ray and containing (A) a multifunctional (meth)acrylate, (B) a urethane (meth)acrylate obtained by reacting a diol having an alicyclic structure (b-1), a lactone (b-2), a polyisocyanate (b-3), and a hydroxyl group-containing (meth)acrylate, and (C) an ultraviolet absorber (e.g. see Japanese Unexamined Patent Application Publication No. 2010-215843).

### SUMMARY

An object of the present invention is to provide an image forming method that can form a cured object having excellent scratch resistance even after exposure to an extremely severe condition such as hot water.

As a solution for the above problems, an image forming method according to an embodiment of the present invention includes: applying, on a base, an active energy ray-curable composition A containing a polymerizable monomer having a phosphoric ester group and a polyester resin; curing the active energy ray-curable composition A; applying, on a cured object of the active energy ray-curable composition A, an active energy ray-curable composition B containing a multifunctional polymerizable compound having two or more polymerizable functional groups in its molecule; and curing the active energy ray-curable composition B.

Further, an active energy ray-curable composition set according to an embodiment of the present invention includes: an active energy ray-curable composition A containing a polymerizable monomer having a phosphoric ester group and a polyester resin; and an active energy ray-curable composition B containing a multifunctional polymerizable compound having two or more polymerizable functional group in its molecule.

Embodiments of the present invention provides an image forming method that can form a cured object having excellent scratch resistance even after exposure to an extremely severe condition such as hot water.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating an example of an apparatus for forming a two-dimensional or three-dimensional image according to an embodiment of the present invention.
FIG. 2 is a schematic diagram illustrating an example of another apparatus for forming a two-dimensional or three-dimensional image according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### (Image Forming Method and Image Forming Apparatus)

The image forming method according to an embodiment of the present invention includes: a composition A applying process of applying, on a base, an active energy ray-curable composition A containing a polymerizable monomer having a phosphoric ester group and a polyester resin; a composition A curing process of curing the active energy ray-curable composition A; a composition B applying process of applying, on a cured object of the active energy ray-curable composition A, an active energy ray-curable composition B containing a multifunctional polymerizable compound having two or more polymerizable functional groups in is molecule; a composition B curing process of curing the active energy ray-curable composition B; and optionally other processes.

The image forming apparatus according to an embodiment of the present invention includes: a composition A applying device accommodating an active energy ray-curable composition A containing a polymerizable monomer having a phosphoric ester group and a polyester resin, and configured to apply, on a base, the active energy ray-curable composition A; a composition A curing device configured to cure the active energy ray-curable composition A; a composition B applying device accommodating an active energy ray-curable composition B containing a multifunctional polymerizable compound having two or more polymerizable functional groups in its molecule, and configured to apply, on a cured object of the active energy ray-curable composition A, the active energy ray-curable composition B; a composition B curing device configured to cure the active energy ray-curable composition B; and optionally other devices.

The image forming method according to an embodiment of the present invention can be desirably implemented using the image forming apparatus according to an embodiment of the present invention. The composition A applying process can be desirably implemented using the composition A applying device. The composition A curing process can be desirably implemented using the composition A curing device. The composition B applying process can be desirably implemented using the composition B applying device. Other processes can be desirably implemented by other devices.

First, to obtain excellent scratch resistance even after treatment under an extremely severe condition such as hot water, the cured object should have high strength and should not be easily peeled off from the base.

As a result of intensive studies on conventional technologies, the inventors have found problems below.

In relation to the inkjet ink composition described in Japanese Unexamined Patent Application Publication No. 2012-162615 described above, although adhesiveness is investigated, the composition may become poor in adhesiveness after immersion in e.g. hot water or an alkaline solution.

In relation to the energy-curable printing ink or coating composition described in Japanese Unexamined Patent Application Publication No. 2015-513601 described above, e.g. an acidic acrylate oligomer, an acrylic acid, and a β-carboxyethyl acrylate are described as exemplary acidic modified adhesion promoters and investigated for adhesiveness, but adhesiveness after treatment under a severe condition such as hot water and an alkaline solution is not investigated.

In relation to Japanese Unexamined Patent Application Publication No. 2020-186372 described above, the active energy ray-curable composition containing the bifunctional (meth)acrylates, the multifunctional (meth)acrylate such as trifunctional or tetrafunctional (meth)acrylate, and the phosphoric acid (meth)acrylate is described, but the composition may become poor in scratch resistance during treatment with hot water.

In relation to Japanese Unexamined Patent Application Publication No. 2010-215843 described above, a laminate having at least a primer layer made of an acrylic resin and a hard coat layer made of an active energy ray-curable composition in this order is described, but the laminate may become poor in scratch resistance during treatment with water.

When a multifunctional polymerizable compound is added to the active energy ray-curable composition so as to improve the strength of the cured object, the more the proportion of the multifunctional polymerizable compound is, the stronger the cured object can become. However, the composition hardens and shrinks during the curing due to influence of the multifunctional polymerizable compound, and adhesiveness to the base may be remarkably decreased.

In addition, when the adhesiveness is remarkably decreased, the scratch resistance may be remarkably decreased, and the cured object may be easily peeled off from the base under a severe situation such as hot water.

As a result of intensive studies, the inventors have found that the active energy ray-curable composition A (hereinafter simply referred to as "composition A" in some cases) having a predetermined composition is applied onto a base to form a layer made of a cured object of the composition A, and thereby the cured object of the composition A can exhibit excellent adhesiveness even after exposure to an extremely severe condition such as hot water.

Also, the inventors have found that the active energy ray-curable composition B (hereinafter simply referred to as "composition B" in some cases) having a predetermined composition is applied onto the cured object of the composition A to form a layer made of a cured object of the composition B, and thereby the cured object excellent in scratch resistance can be formed even after exposure to an extremely severe condition such as hot water.

That means, the inventors have found that two separate compositions: an active energy ray-curable composition A containing a polymerizable monomer having a phosphoric ester group and a polyester resin; and an active energy ray-curable composition B containing a multifunctional polymerizable compound having two or more polymerizable functional groups in its molecule, are used in combination and laminated to form a cured object excellent in scratch resistance.

Although the cause of this finding is uncertain, this finding is expected to result from the followings.

For example, there is a tendency that, when an active energy ray-curable composition is applied on an impermeable base such as glass, the composition does not permeate into the base, and adhesiveness between the cured object and the base is decreased.

However, it is considered that, using a polymerizable monomer having a phosphoric ester group, a phosphoric ester group moiety dissolves the base to develop interaction between the base and the composition, and very high adhesiveness between the cured object of the composition and the base can be achieved.

Regarding the decrease in adhesiveness between the base and the cured object, it is considered that, for example, when the cured object formed on the base is immersed in hot water or an alkaline solution, hot water or the alkaline solution permeates into the interface between the base and the cured object or the inside of the cured object, leading to remarkable decrease in the adhesiveness.

In contrast, it is considered that, when a polymerizable monomer having a phosphoric ester group and a polyester resin are added to the composition, the interaction with the base and the strength of the cured object can be considerably improved, hot water or the alkaline solution is prevented from permeating into the interface between the base and the cured object or the inside of the cured object, a very excellent adhesiveness can be achieved even after immersion in hot water or an alkaline solution.

In addition, it can be considered that a multifunctional polymerizable compound is added to the composition.

When a polymerizable monomer having a phosphoric ester group, and a multifunctional polymerizable compound are included in one composition, a crosslinked structure is formed by the multifunctional polymerizable compound, and therefore the strength of the cured object can be improved. On the other hand, it is considered that, in this composition, the polymerizable monomer having a phosphoric ester group is incorporated into the crosslinked structure, thereby the interaction between the phosphoric ester group and the base is lowered, resulting in decrease in the scratch resistance.

However, as an investigation, the inventors have found that merely combination of compositions containing separately a polymerizable monomer having a phosphoric ester group and a multifunctional polymerizable compound cannot achieve excellent scratch resistance in some cases. For example, using (1) a composition containing a polymerizable monomer having a phosphoric ester group and (2) a composition containing a multifunctional polymerizable compound, a cured object (layer) of (2) was formed on a cured object (layer) of (1) formed on a glass base. As a result of subjecting a printed object of this cured object to a pencil hardness test in accordance with JIS K5600-5-4 (scratch hardness: pencil method), it was found that the cured object (layer) of (1) remained on the glass base, but the cured object (layer) of (2) was easily scraped off.

Presumably, this is because there is a significant difference in internal stress between the cured object (layer) of (1) and the cured object (layer) of (2), and the interaction between the layers is lowered, thereby only the cured object (layer) of (2) is scraped off, resulting in fail in achieving excellent scratch resistance.

As a result of intensive studies, the inventors have found that a polymerizable monomer having a phosphoric ester group and a multifunctional polymerizable compound are separated into different compositions, then a polyester resin is further added to (1) to achieve high adhesiveness and excellent scratch resistance. Presumably, this is because the polyester resin has high affinity with the polymerizable monomer having a phosphoric ester group having an ester structure similar to the polyester structure of the polyester resin, and the cured object (layer) itself formed on the base becomes stronger and can have an appropriate stress. In addition, since lowering of the interaction between the layers can be prevented by adding the polyester resin to (1), it is considered that excellent scratch resistance can be achieved.

In this specification, "hot water" means water heated to 80°C or higher at normal pressure, i.e. water at a temperature of 80°C or higher and 100°C or lower at normal pressure.

### <Composition A Applying Process and Composition A Applying Device>

In the composition A applying process, the active energy ray-curable composition A containing the polymerizable monomer having a phosphoric ester group and a polyester resin are applied on a base.

The composition A applying device is configured to apply, on a base, the active energy ray-curable composition A containing the polymerizable monomer having a phosphoric ester group and a polyester resin.

### - Active Energy Ray-Curable Composition A -

The active energy ray-curable composition A contains a polymerizable monomer having a phosphoric ester group and a polyester resin, and optionally other components.

### -- Polymerizable Monomer Having Phosphoric Ester Group --

The active energy ray-curable composition A contains a polymerizable monomer having a phosphoric ester group. In the present disclosure, for example, if the base is made of glass, inclusion of the polymerizable monomer having a phosphoric ester group makes it possible to improve the interaction between the base and the composition and achieve very high adhesiveness between the cured object of the composition and the base, because the phosphoric ester group moiety dissolves the base.

The polymerizable functional group in the polymerizable monomer having the phosphoric ester group is not particularly limited and can be suitably selected to suit to a particular application. Specific examples of the polymerizable functional group include, but are not limited to, a (meth)acryloyl group.

The polymerizable monomer having the phosphoric ester group is preferably a multifunctional monomer having two or more polymerizable functional groups in its molecule, more preferably a multifunctional monomer having three polymerizable functional groups in its molecule.

When the polymerizable monomer having the phosphoric ester groups is a multifunctional monomer having two or more polymerizable functional groups in its molecule, the cured object of the composition A after immersed in hot water can exhibit very excellent scratch resistance. In addition, the adhesiveness between the cured object of the composition A and the base after immersed in an alkaline solution can be made better.

Specific examples of the polymerizable monomer having the phosphoric ester group include, but are not limited to, 2-acryloyloxyethyl acid phosphate (number of polymerizable functional group: 1), 2-(meth)acryloyloxyethyl dihydrogen phosphate (number of polymerizable functional group: 1), and dipentaerythritol penta(meth)acryloyloxy dihydrogen phosphate (number of polymerizable functional groups: 5). Each of these polymerizable monomers can be used alone or in combination with others.

As the polymerizable monomer having the acidic group, a commercially available product can be used.

Specific Examples of the commercially available product include, but are not limited to, SR9050NS (manufactured by SARTOMER LLC, number of polymerizable functional group: 1), SR9051NS (manufactured by SARTOMER LLC, number of polymerizable functional groups: 3), and LIGHTACRYLATE^{®} P-1A (N) (manufactured by KYOEISYA K.K., number of polymerizable functional group: 1).

A proportion of the polymerizable monomer having a phosphoric ester group is preferably 3% by mass or more and 10% by mass or less based on the total amount of the composition A.

If the proportion of the polymerizable monomer having the phosphoric ester group is 3% by mass or more and 10% by mass or less based on the total amount of the composition A, the cured object can exhibit excellent scratch resistance even after immersed in hot water. In addition, even after immersed in an alkaline solution, the cured object can exhibit excellent adhesiveness. Furthermore, if the proportion of the polymerizable monomer having the phosphoric ester group is 3% by mass or more and 10% by mass or less based on the total amount of the composition A, it is possible to obtain an active energy ray-curable composition excellent in resistance to degradation due to liquid contacting and in discharge stability.

The liquid contacting means that, e.g. in a case of inkjet printing, a member such as a jig used for applying the active energy ray-curable composition, e.g. an inkjet head is brought into contact with the active energy ray-curable composition.

If the proportion of the polymerizable monomer having a phosphoric ester group is more than 10% by mass based on the total amount of the composition A, metal members may deteriorate especially when the composition A is brought into contact with the metal members. Thus, from the viewpoint of resistance to deterioration due to the liquid contacting, the proportion of the polymerizable monomer having a phosphoric ester group is preferably 10% by mass or less based on the total amount of the composition A.

### -- Polyester Resin --

The polyester resin is not particularly limited and can be suitably selected to suit to a particular application.

Since the polyester resin has a chemical structure similar to that of the phosphoric ester group in the polymerizable monomer, affinity between their molecules is high. Thus, combination of the polyester resin and the monomer having the phosphoric ester group makes it possible to increase hardness of the resultant cured object and improve an effect of suppressing cohesive failure of the cured object.

From the viewpoint of compatibility with monomers (e.g. monomers, organic solvents), it is preferable that the polyester resin dissolves in a monomer or an organic solvent. Each of these polyester resins can be used alone or in combination with others.

As the polyester resin, a commercially available product can be used.

Specific examples of the commercially available product include, but are not limited to, UVAD-081 (manufactured by OSAKA SODA CO., LTD., number average molecular weight: 1,400), UVAD-085 (manufactured by OSAKA SODA CO., LTD., number average molecular weight: 2,000), VYLON^{®} GK-810 (manufactured by TOYOBO CO., LTD., number average molecular weight: 6,000), VYLON^{®} 200 (manufactured by TOYOBO CO., LTD., number average molecular weight: 17,000), VYLON^{®} GK-360 (manufactured by TOYOBO CO., LTD., number average molecular weight: 16,000), and VYLON^{®} 600 (manufactured by TOYOBO CO., LTD., number average molecular weight: 16,000).

Preferably, the polyester resin has unsaturated bonds. When the polyester resin has unsaturated bonds, the adhesiveness between the cured object and the base after immersed in hot water or an alkaline solution can be made better.

Specific examples of the polyester resin having unsaturated bonds include, but are not limited to, UVAD-081 (manufactured by OSAKA SODA CO., LTD., number average molecular weight: 1,400) and UVAD-085 (manufactured by OSAKA SODA CO., LTD., number average molecular weight: 2,000).

The number average molecular weight of the polyester resin is preferably 3,000 or less, more preferably 2,000 or less, even more preferably 500 or more and 2,000 or less. If the number average molecular weight of the polyester resin is 3,000 or less, the adhesiveness between the cured object of the composition A and the base can be improved. Furthermore, if the number average molecular weight of the polyester resin is 3,000 or less, the discharge stability of the composition A can be improved.

The proportion of the polyester resin is preferably 3% by mass or more and 15% by mass or less, more preferably 3% by mass or more and 10% by mass or less, even more preferably 5% by mass or more and 10% by mass or less, based on the total amount of the composition A. If the proportion of the polyester resin is 3% by mass or more and 15% by mass or less based on the total amount of the composition A, the cured object of the composition A after immersed in hot water can exhibit very excellent scratch resistance. In addition, the adhesiveness between the cured object of the composition A and the base after immersed in an alkaline solution can be made better. Furthermore, if the proportion of the polyester resin is 3% by mass or more and 15% by mass or less based on the total amount of the composition A, the discharge stability of the composition A can be improved.

### -- Other Components --

Specific examples of other components include, but are not limited to, polymerizable compounds other than the aforementioned polymerizable monomer having a phosphoric ester group, surfactants, polymerization initiators, polymerization accelerators, colorants, organic solvents, and other components.

### --- Polymerizable Compounds Other Than the Polymerizable Monomer Having Phosphoric Ester Group ---

Polymerizable compounds other than the aforementioned polymerizable monomer having a phosphoric ester group are not particularly limited, and a conventionally known polymerizable compound can be used.

Specific examples of the polymerizable compounds other than the aforementioned polymerizable monomer having a phosphoric ester group include, but are not limited to, polymerizable monomers and polymerizable oligomers.

Specific examples of the polymerizable compounds other than the polymerizable monomer having a phosphoric ester group include, but are not limited to; monofunctional polymerizable compounds such as tetrahydrofurfuryl acrylate, phenoxyethyl acrylate, 2-hydroxyethyl acrylate, ethyl acrylate, 2-hydroxypropyl acrylate, isobutyl acrylate, t-butyl acrylate, cyclic trimethylolpropane formal monoacrylate, imidoacrylate, 2,2,2-trifluoroethyl acrylate, N-vinylformamide, cyclohexyl acrylate, benzyl acrylate, 4-t-butylcyclohexyl acrylate, caprolactone-modified tetrahydrofurfuryl acrylate, ethoxylated tribromophenyl acrylate, phenoxydiethylene glycol acrylate, vinylpyrrolidone, 2-hydroxy-3-phenoxypropyl acrylate, 1,4-cyclohexanedimethanol monoacrylate, stearyl acrylate, lauryl acrylate, 3,3,5-trimethylcyclohexyl acrylate, ethoxylated nonylphenyl acrylate, alkoxylated 2-phenoxyethyl acrylate, phenoxypolyethylene glycol acrylate, dimethyl acrylamide, hydroxyethyl acrylamide, isopropyl acrylamide, diethyl acrylamide, and dimethylaminopropyl acrylamide; and multifunctional polymerizable compounds such as pentaerythritol tri(meth)acrylate, dipropylene glycol diacrylate, tripropylene glycol diacrylate, trimethylolpropane triacrylate, pentaerythritol tetra(meth)acrylate, dipentaerythritol tetra(meth)acrylate, dipentaerythritol hexa(meth)acrylate, trimethylolpropane tri(meth)acrylate, tetramethylolmethane tetra(meth)acrylate, trimethylolethane tri(meth)acrylate, trimethylolpropane tri(meth)acrylate, 3-methyl-1,5-pentanediol di(meth)acrylate, 1,6-hexanediol di(meth)acrylate, 1,9-nonanediol di(meth)acrylate, 1,3-butylene glycol di(meth)acrylate, 1,10-decanediol di(meth)acrylate, neopentyl glycol di(meth)acrylate hydroxypivalate, tetramethylolmethane tri(meth)acrylate, dimethylol tricyclodecane di(meth)acrylate, modified glycerol tri(meth)acrylate, bisphenol A diglycidyl ether (meth)acrylate adduct, modified bisphenol A di(meth)acrylate, dipentaerythritol hexa(meth)acrylate, neopentyl glycol (meth)acrylate hydroxypivalate adduct, 2-hydroxy-3-acryloyloxy propyl methacrylate, urethane acrylate oligomer, ditrimethylolpropane tetra(meth)acrylate, and pentaerythritol tri(meth)acrylate hexamethylene diisocyanate urethane prepolymer.

Each of these polymerizable compounds can be used alone or in combination with others.

The (meth)acrylate adduct refers to an acrylate adduct or a methacrylate adduct, and the (meth)acrylate refers to acrylate or methacrylate.

The polymerizable compound other than the aforementioned polymerizable monomer having a phosphoric ester group is preferably a multifunctional monomer having two or more polymerizable functional groups in its molecule.

A proportion of the multifunctional monomer having two or more polymerizable functional groups in its molecule is preferably 25% by mass or less, more preferably 15% by mass or less, even more preferably 10% by mass or less, based on the total amount of the composition A. If the proportion of the multifunctional monomer having two or more polymerizable functional groups in its molecule is 25% by mass or less based on the total amount of the composition A, the cured object of the composition A after immersed in hot water can exhibit very excellent scratch resistance. In addition, the adhesiveness between the cured object of the composition A and the base after immersed in an alkaline solution can be made better.

From the viewpoint of improving the wettability of the active energy ray-curable composition A to the base, it is more preferable that the active energy ray-curable composition A contains a surfactant.

The surfactant is not particularly limited and can be suitably selected to suit to a particular application. Specific examples of the surfactant include, but are not limited to, TEGO^{®} WET270 (manufactured by Evonik Industries AG).

### --- Polymerization Initiator ---

The active energy ray-curable composition A according to an embodiment of the present invention may contain a polymerization initiator. The polymerization initiator may be any substance that can generate active species such as radical and cation by energy of an active energy ray, to initiate polymerization of a polymerizable compound (e.g., monomer and oligomer). As the polymerization initiator, e.g. known radical polymerization initiators, cationic polymerization initiators, and base generators can be used alone or in combination with others. Above all, it is preferable to use radical polymerization initiators. In order to achieve a sufficient curing speed, the proportion of the polymerization initiator is preferably 5 to 20% by mass based on the total mass of the composition (100% by mass).

Specific examples of the radical polymerization initiators include, but are not limited to, aromatic ketones, acylphosphine oxide compounds, aromatic onium salt compounds, organic peroxides, thio compounds (e.g., thioxanthone compounds and thiophenyl-group-containing compounds), hexaaryl biimidazole compounds, ketoxime ester compounds, borate compounds, azinium compounds, metallocene compounds, active ester compounds, carbon-halogen-bond-containing compounds, and alkylamine compounds.

In addition, a polymerization accelerator (sensitizer) is optionally used together with the polymerization initiator. Specific examples of the polymerization accelerator include, but are not limited to, amine compounds such as trimethylamine, methyldimethanolamine, triethanolamine, p-diethylaminoacetophenone, ethyl p-dimethylaminobenzoate, 2-ethylhexyl p-dimethylaminobenzoate, N,N-dimethylbenzylamine, and 4,4'-bis(diethylamino)benzophenone. The proportion of the polymerization accelerator can be determined as appropriate depending on a type and amount of the polymerization initiator used in combination.

### --- Colorant ---

The active energy ray-curable composition A according to an embodiment of the present invention optionally contains a colorant. Specific examples of the colorant include, but are not limited to, various pigments and dyes having colors such as black, white, magenta, cyan, yellow, green, and orange, or metallic colors such as gold and silver. The proportion of the colorant is not particularly limited and can be determined as appropriate depending on e.g. a desired color density and dispersibility in the composition. However, the proportion of the colorant is preferably from 0.1% to 20% by mass based on the total mass (100% by mass) of the composition. The active energy ray-curable composition according to an embodiment of the present invention may contain no colorant to be colorless and transparent. In this case, the active energy ray-curable composition is desirably used for e.g. an overcoat layer for protecting an image.

Specific examples of the pigments include, but are not limited to, inorganic pigments and organic pigments. Each of these pigments can be used alone or in combination with others.

Specific examples of the inorganic pigments include, but are not limited to, carbon blacks (C.I. Pigment Black 7) such as furnace black, lamp black, acetylene black, and channel black, as well as iron oxides, and titanium oxides.

Specific examples of the organic pigments include, but are not limited to, azo pigments such as insoluble azo pigments, condensed azo pigments, azo lakes, and chelate azo pigments; polycyclic pigments such as phthalocyanine pigments, perylene pigments, perinone pigments, anthraquinone pigments, quinacridone pigments, dioxane pigments, thioindigo pigments, isoindolinone pigments, and quinophthalone pigments; dye chelates (e.g., basic dye chelates, acid dye chelates); dye lakes (e.g., basic dye lakes, acidic dye lakes); nitro pigments; nitroso pigments; aniline black; and daylight fluorescent pigments.

The active energy ray-curable composition may further contain a dispersant for improving dispersibility of the pigment. The dispersant is not particularly limited. Specific examples of the dispersant include, but are not limited to, polymer dispersants conventionally used to prepare a pigment dispersion.

Specific Examples of the dyes include, but are not limited to, acidic dyes, direct dyes, reactive dyes, and basic dyes. Each of these dyes can be used alone or in combination with others.

### --- Organic Solvent ---

The active energy ray-curable composition A according to an embodiment of the present invention optionally contains an organic solvent although it is preferable to spare the organic solvent. When the composition is a VOC (volatile organic compound) free composition containing no organic solvent, a higher degree of safety is provided at sites where the composition is handled and environment pollution can be prevented. Here, the "organic solvent" refers to a typical non-reactive organic solvent, such as ether, ketone, xylene, ethyl acetate, cyclohexanone, and toluene. The organic solvent is discriminated from a reactive monomer. When the composition is stated to "contain no organic solvent", it means that the composition does not substantially contain an organic solvent. In this case, the proportion of the organic solvent in the composition is preferably less than 0.1% by mass.

### --- Other Components ---

The active energy ray-curable composition A according to an embodiment of the present invention may optionally contain other components. Specific examples of other components include, but are not limited to, conventionally known polymerization inhibitors, leveling agents, defoamers, fluorescence brightening agents, permeation accelerators, wetting agents (humectant), fixing agents, viscosity stabilizers, fungicides, preservatives, antioxidants, ultraviolet absorbers, chelate agents, pH adjusters, and thickening agents.

### [Preparation of Active Energy Ray-Curable Composition A]

The active energy ray-curable composition A according to an embodiment of the present invention can be prepared using the components described above. The preparation devices and conditions of the composition A are not particularly limited. For example, the composition A can be prepared by subjecting e.g. a polymerizable monomer, a pigment, and a dispersant to a dispersion treatment using a dispersing machine such as a ball mill, a kitty mill, a disk mill, a pin mill, and a DYNO-MILL to prepare a pigment liquid dispersion, and further mixing the pigment liquid dispersion with e.g. a polymerizable monomer, an initiator, a polymerization inhibitor, and a surfactant.

### [Viscosity]

A viscosity of the active energy ray-curable composition A according to an embodiment of the present invention is not particularly limited and can be adjusted as appropriate depending on a use application and an applying device. However, from the viewpoint of enhancing the interaction between the base and the active energy ray-curable composition and achieving better adhesiveness, the viscosity is preferably 40 mPa·s or lower, more preferably 30 mPa·s or lower at 25°C.

The viscosity can be measured with a cone plate rotary viscometer VISCOMETER TVE-25L manufactured by Toki Sangyo Co., Ltd. by using a cone rotor (1°34'×R24) and setting the rotation speed to 50 rpm and the temperature of constant-temperature circulating water to 25°C. The temperature of the circulating water can be adjusted using an instrument VISCOMATE VM-150III.

The method for applying the active energy ray-curable composition A on the base is not particularly limited and can be suitably selected to suit to a particular application. Specific Examples of the method include, but are not limited to, an application process using a bar coater or a coating roller, and an inkjet process.

The aforementioned base is not particularly limited and can be suitably selected to suit to a particular application. Specific Examples of the base include, but are not limited to, paper, thread, fiber, fabric, leather, metal, plastic, glass, wood, ceramics, or composite materials thereof. A preferable cured object of the active energy ray-curable composition according to an embodiment of the present invention can be formed particularly on impermeable bases such as metal, plastic, glass, and ceramics. Above all, on a glass base, the active energy ray-curable composition can be desirably used. Specific Examples of the glass base include, but are not limited, transparent glass and surface-processed glass. Specific Examples of the surface-processed glass includes, but are not limited to, frosted glass with a surface processed to be opaque, and glass with a surface coated with e.g. tin.

Specific Examples of the base shape include, but are not limited to, a planar shape, and a non-planar shape such as a bottle shape.

### <Composition A Curing Process and Composition A Curing Device>

In the composition A curing process, the active energy ray-curable composition A is cured.

The composition A curing device is configured to cure the active energy ray-curable composition A.

### [Active Energy Ray]

Specific examples of the active energy ray for curing the active energy ray-curable composition according to an embodiment of the present invention include, but are not limited to, ultraviolet ray, electron beam, α-ray, β-ray, γ-ray, and X-ray, each of which can give energy to polymerizable compounds included in the composition to cause a polymerization reaction. Particularly when a high-energy light source is used, the polymerization reaction can proceed without a polymerization initiator.

The composition A curing device is not particularly limited and can be suitably selected to suit to a particular application. Specific Examples of the device include, but are not limited to, an active energy ray irradiator.

Specific examples of the active energy ray irradiator include, but are not limited to, GaN-based semiconductor ultraviolet light emitting devices, ultraviolet light emitting diodes (UV-LED), ultraviolet laser diodes (UV-LD), and metal halide lamps.

### [Method for Curing Active Energy Ray-Curable Composition A]

Specific examples of the method for curing the active energy ray-curable composition A by irradiation with the active energy ray include, but are not limited to; (1) a method in which the active energy ray-curable composition A is applied on the base and then promptly irradiated with an active energy ray to cure the active energy ray-curable composition A; (2) a method in which the active energy ray-curable composition A is applied on the base and, after a certain period of time, irradiated with an active energy ray to cure the active energy ray-curable composition A.

It is preferable to adopt (2) the method in which the active energy ray-curable composition A is applied on the base and, after a certain period of time, irradiated with an active energy ray to cure the active energy ray-curable composition A, because the method (2) can improve the scratch resistance after the immersion in hot water and the adhesiveness after the immersion in an alkaline solution.

Presumably, this is because, a certain period of time between the application of the active energy ray-curable composition A on the base and the irradiation with the active energy ray makes it possible to prolong the time taken for the active energy ray-curable composition A applied on the base to act on the base, and possible to strengthen the interaction between the base and the active energy ray-curable composition A.

The time between the application of the active energy ray-curable composition A on the base and the irradiation with the active energy ray (elapsed time after the application) is preferably 5 seconds or longer and 30 seconds or shorter, more preferably 5 seconds or longer and 20 seconds or shorter.

### <Composition B Applying Process and Composition B Applying Device>

In the composition B applying process, the active energy ray-curable composition B containing a multifunctional polymerizable compound having two or more polymerizable functional groups in its molecule is applied on the cured object of the active energy ray-curable composition A.

The composition B applying device is configured to apply, on the cured object of the active energy ray-curable composition A, the active energy ray-curable composition B containing a multifunctional polymerizable compound having two or more polymerizable functional groups in its molecule.

### - Active Energy Ray-Curable Composition B -

The active energy ray-curable composition B contains a multifunctional polymerizable compound having two or more polymerizable functional groups in its molecule, and optionally other components.

### -- Multifunctional Polymerizable Compound Having Two or More Polymerizable Functional Groups in its Molecule--

The multifunctional polymerizable compound having two or more polymerizable functional groups in its molecule is not particularly limited as long as the molecule of the compound has two or more polymerizable functional groups, and can be suitably selected to suit to a particular application. For example, a conventionally known multifunctional polymerizable monomer and multifunctional polymerizable oligomer can be used as appropriate, but it is preferable to use a multifunctional polymerizable monomer from the viewpoint of an influence on the discharge stability.

### -- Multifunctional Polymerizable Compound --

Specific examples of the multifunctional polymerizable compound include, but are not limited to, multifunctional polymerizable compounds such as pentaerythritol tri(meth)acrylate, dipropylene glycol diacrylate, tripropylene glycol diacrylate, trimethylolpropane triacrylate, pentaerythritol tetra(meth)acrylate, dipentaerythritol tetra(meth)acrylate, pentaerythritol (meth)hexaacrylate, trimethylolpropane tri(meth)acrylate, tetramethylolmethane tetra(meth)acrylate, trimethylolethane tri(meth)acrylate, trimethylolpropane tri(meth)acrylate, 3-methyl-1,5-pentanediol di(meth)acrylate, 1,6-hexanediol di(meth)acrylate, 1,9-nonanediol di(meth)acrylate, 1,3-butylene glycol di(meth)acrylate, 1,10-decanediol di(meth)acrylate, neopentyl glycol di(meth)acrylate hydroxypivalate, tetramethylolmethane tri(meth)acrylate, dimethylol tricyclodecane di(meth)acrylate, modified glycerol tri(meth)acrylate, bisphenol A diglycidyl ether (meth)acrylate adduct, modified bisphenol A di(meth)acrylate, dipentaerythritol hexa(meth)acrylate, neopentyl glycol (meth)acrylate hydroxypivalate adduct, 2-hydroxy-3-acryloyloxypropyl methacrylate, urethane acrylate oligomer, pentaerythritol tri(meth)acrylate hexamethylene diisocyanate urethane prepolymer, ditrimethylolpropane tetra(meth)acrylate, and pentaerythritol tri(meth)acrylate hexamethylene diisocyanate urethane prepolymer.

Each of these multifunctional polymerizable compounds can be used alone or in combination with others.

The number of the functional groups in the multifunctional polymerizable compound is preferably 2 or more and 6 or less, particularly preferably 2 or more and 3 or less.

The proportion of the multifunctional polymerizable compound is preferably 50% by mass or more, more preferably 60% by mass or more, particularly preferably 60% by mass or more and 80% by mass or less, based on the total amount of the composition B. If the proportion of the multifunctional polymerizable compound is 50% by mass or more based on the total amount of the composition B, the scratch resistance of the composition B after immersed in hot water can be improved. Also, the adhesiveness between the cured object of the composition A and the cured object of the composition B after immersed in an alkaline solution can be made better.

### -- Other Components --

Specific examples of other components described above include, but are not limited to, other polymerizable compounds, surfactants, polymerization initiators, polymerization accelerators, colorants, organic solvents, and other components.

### --- Other Polymerizable Compounds ---

Specific examples of other polymerizable compounds described above include, but are not limited to, urethane acrylate oligomers.

The inclusion of the urethane acrylate oligomer makes it possible to improve the scratch resistance after immersed in an ethanol solution.

The urethane acrylate oligomer is not particularly limited and can be suitably selected to suit to a particular application. Specific examples of the urethane acrylate oligomer include, but are not limited to: EBECRYL^{®} 294/25HD, EBECRYL^{®} 4220, EBECRYL^{®} 4513, EBECRYL^{®} 4740, EBECRYL^{®} 4820, EBECRYL^{®} 8465, EBECRYL^{®} 9260, EBECRYL^{®} 8701, KRM^{®} 8667, EBECRYL^{®} 4666, EBECRYL^{®} 8405, EBECRYL^{®} 210, EBECRYL^{®} 220, manufactured by DAICEL-ALLNEX LTD.; CN series commercially available as functional urethane acrylate oligomers, such as CN8885NS, manufactured by SARTOMER LLC. Each of these urethane acrylate oligomers can be used alone or in combination with others.

The proportion of the urethane acrylate oligomer is preferably 3% by mass or more and 10% by mass or less, more preferably 3% by mass or more and 6% by mass or less, based on the total amount of the composition B. If the proportion of the urethane acrylate oligomer is 3% by mass or more and 10% by mass or less based on the total amount of the composition B, scratch resistance after immersion in an ethanol solution and inkjet discharge stability can be improved.

From the viewpoint of improving the wettability of the active energy ray-curable composition B onto the cured object of the composition A, it is preferable that the active energy ray-curable composition B contains a surfactant.

The surfactant is not particularly limited and can be suitably selected to suit to a particular application. Specific examples of the surfactant include, but are not limited to, TEGO^{®} Rad 2300 (manufactured by Evonik Industries AG).

### --- Polymerization Initiator ---

The active-energy-ray-curable composition B according to an embodiment of the present invention optionally contains a polymerization initiator. The polymerization initiator may be any substance that can generate active species such as radical and cation by energy of an active energy ray, to initiate polymerization of a polymerizable compound (e.g., monomer and oligomer). As the polymerization initiator, e.g. known radical polymerization initiators, cationic polymerization initiators, and base generators can be used alone or in combination with others. Above all, it is preferable to use radical polymerization initiators. In order to secure a sufficient curing speed, the proportion of the polymerization initiator is preferably 5 to 20% by mass based on the total mass of the composition (100% by mass).

Specific examples of the radical polymerization initiators include, but are not limited to, aromatic ketones, acylphosphine oxide compounds, aromatic onium salt compounds, organic peroxides, thio compounds (e.g., thioxanthone compounds and thiophenyl-group-containing compounds), hexaaryl biimidazole compounds, ketoxime ester compounds, borate compounds, azinium compounds, metallocene compounds, active ester compounds, carbon-halogen-bond-containing compounds, and alkylamine compounds.

In addition, a polymerization accelerator (sensitizer) is optionally used together with the polymerization initiator. Specific examples of the polymerization accelerator include, but are not limited to, amine compounds such as trimethylamine, methyldimethanolamine, triethanolamine, p-diethylaminoacetophenone, ethyl p-dimethylaminobenzoate, 2-ethylhexyl p-dimethylaminobenzoate, N,N-dimethylbenzylamine, and 4,4'-bis(diethylamino)benzophenone. The proportion of the polymerization accelerator can be determined as appropriate depending on a type and amount of the polymerization initiator used in combination.

### --- Colorant ---

The active energy ray-curable composition B according to an embodiment of the present invention optionally contains a colorant. Specific examples of the colorant include, but are not limited to, various pigments and dyes having colors such as black, white, magenta, cyan, yellow, green, and orange, or metallic colors such as gold and silver. The proportion of the colorant is not particularly limited and can be determined as appropriate depending on e.g. a desired color density and dispersibility in the composition. However, the proportion of the colorant is preferably from 0.1% to 20% by mass based on the total mass (100% by mass) of the composition. The active energy ray-curable composition according to an embodiment of the present invention may contain no colorant to be colorless and transparent. In this case, the active energy ray-curable composition is desirably used for e.g. an overcoat layer for protecting an image.

Specific examples of the pigments include, but are not limited to, inorganic pigments and organic pigments. Each of these pigments can be used alone or in combination with others.

Specific examples of the inorganic pigments include, but are not limited to, carbon blacks (C.I. Pigment Black 7) such as furnace black, lamp black, acetylene black, and channel black, as well as iron oxides, and titanium oxides.

Specific examples of the organic pigments include, but are not limited to, azo pigments such as insoluble azo pigments, condensed azo pigments, azo lakes, and chelate azo pigments; polycyclic pigments such as phthalocyanine pigments, perylene pigments, perinone pigments, anthraquinone pigments, quinacridone pigments, dioxane pigments, thioindigo pigments, isoindolinone pigments, and quinophthalone pigments; dye chelates (e.g., basic dye chelates, acid dye chelates); dye lakes (e.g., basic dye lakes, acidic dye lakes); nitro pigments; nitroso pigments; aniline black; and daylight fluorescent pigments.

The active energy ray-curable composition may further contain a dispersant for improving dispersibility of the pigment. The dispersant is not particularly limited. Specific examples of the dispersant include, but are not limited to, polymer dispersants conventionally used to prepare a pigment dispersion.

Specific Examples of the dyes include, but are not limited to, acidic dyes, direct dyes, reactive dyes, and basic dyes. Each of these dyes can be used alone or in combination with others.

### --- Organic Solvent ---

The active energy ray-curable composition B according to an embodiment of the present invention optionally contains an organic solvent although it is preferable to spare the organic solvent. When the composition is a VOC (volatile organic compound) free composition containing no organic solvent, a higher degree of safety is provided at sites where the composition is handled and environment pollution can be prevented. Here, the "organic solvent" refers to a typical non-reactive organic solvent, such as ether, ketone, xylene, ethyl acetate, cyclohexanone, and toluene. The organic solvent is discriminated from a reactive monomer. When the composition is stated to "contain no organic solvent", it means that the composition does not substantially contain an organic solvent. In this case, the proportion of the organic solvent in the composition is preferably less than 0.1% by mass.

### --- Other Components ---

The active energy ray-curable composition B according to an embodiment of the present invention optionally contains other known components. Specific examples of other components include, but are not limited to, conventionally known polymerization inhibitors, leveling agents, defoamers, fluorescence brightening agents, permeation accelerators, wetting agents (humectant), fixing agents, viscosity stabilizers, fungicides, preservatives, antioxidants, ultraviolet absorbers, chelate agents, pH adjusters, and thickening agents.

### [Preparation of Active Energy Ray-Curable Composition B]

The active energy ray-curable composition B can be prepared using the components described above. The preparation devices and conditions of the composition B are not particularly limited. For example, the composition B can be prepared by subjecting e.g. a polymerizable monomer, a pigment, and a dispersant to a dispersion treatment using a dispersing machine such as a ball mill, a kitty mill, a disk mill, a pin mill, and a DYNO-MILL to prepare a pigment liquid dispersion, and further mixing the pigment liquid dispersion with e.g. a polymerizable monomer, an initiator, a polymerization inhibitor, and a surfactant.

A viscosity of the active energy ray-curable composition B according to an embodiment of the present invention is not particularly limited and can be adjusted as appropriate depending on a use application and an applying device. However, from the viewpoint of enhancing the interaction between the base and the active energy ray-curable composition and achieving better adhesiveness, the viscosity is preferably 40 mPa·s or lower, more preferably 30 mPa·s or lower at 25°C.

The viscosity can be measured with a cone plate rotary viscometer VISCOMETER TVE-25L manufactured by Toki Sangyo Co., Ltd. by using a cone rotor (1°34'×R24) and setting the rotation speed to 50 rpm and the temperature of constant-temperature circulating water to 25°C. The temperature of the circulating water can be adjusted using an instrument VISCOMATE VM-150III.

The method for applying the active energy ray-curable composition B on the cured object of the composition A is not particularly limited and can be suitably selected to suit to a particular application. Specific Examples of the method include, but are not limited to, an application process using a bar coater or a coating roller, and an inkjet process.

### <Composition B Curing Process and Composition B Curing Device>

In the composition B curing process, the active energy ray-curable composition B is cured.

The composition B curing device is configured to cure the active energy ray-curable composition B.

As the composition B curing device, the same device as the composition A curing device can be used.

### <Method for Curing Active Energy Ray-Curable Composition B>

Specific examples of the method for curing the active energy ray-curable composition B by irradiation with an active energy ray include, but are not limited to; (1) a method in which the active energy ray-curable composition B is applied on the composition A and then promptly irradiated with the active energy ray to cure the active energy ray-curable composition B; (2) a method in which the active energy ray-curable composition B is applied on the composition A and, after a certain period of time, irradiated with the active energy ray to cure the active energy ray-curable composition B.

In particular, the active energy ray-curable composition B placed on the topmost surface is cured by the method (2) in which the active energy ray-curable composition B is applied on the composition A and, after a certain period of time, irradiated with the active energy ray to cure the composition B, so that surface friction can be reduced, scratch resistance after immersion in hot water can be made better, and a glossy image can be formed.

This is because the active energy ray-curable composition B applied on the cured object of the composition A is made to wet and spread by curing the active energy ray-curable composition B as in the method (2), and thereby the surface of the cured composition B becomes smooth.

The time between the application of the active energy ray-curable composition B on the cured object of the composition A and the irradiation with the active energy ray (elapsed time after the application) is preferably 5 seconds or longer and 30 seconds or shorter, more preferably 5 seconds or longer and 20 seconds or shorter.

The active energy ray-curable composition B applying process and curing process include repeating the composition B applying process and the composition B curing process such that preferably two or more layers, more preferably three or more layers, which contain the cured object of the active energy ray-curable composition B are formed on the cured object of the composition A.

By forming two or more layers containing the cured object of the active energy ray-curable composition B, the cured object of the composition B after immersed in hot water can exhibit very good scratch resistance.

When forming two or more layers containing the cured object of the active energy ray-curable composition B, it is preferable that each layer is cured for each layer application process. That means, it is preferable that, for each layer, each curing process is carried out after each application process.

For example, if two types of compositions, B₁ and B₂ are applied as the active energy ray-curable composition B, it is preferable that, first, the composition B₁ is applied on the cured object of the active energy ray-curable composition A applied on the base, then the B₁ is cured, subsequently the B₂ is applied on the B₁, and then the B₂ is cured. Note that the B₁ and B₂ may be different compositions or the same composition.

When forming two or more layers containing the cured object of the active energy ray-curable composition B, the method for curing each layer is not particularly limited and can be suitably selected to suit to a particular application. The respective layers may be cured by different curing methods or the same method.

### <Other Processes and Other Devices>

Other processes described above are not particularly limited and can be suitably selected to suit to a particular application. Specific examples of other processes include, but are not limited to, a composition C applying process and a composition C curing process.

Other devices described above are not particularly limited and can be suitably selected to suit to a particular application. Specific examples of other devices include, but are not limited to, a composition C applying device and a composition C curing device.

In the composition C applying process, an active energy ray-curable composition C different from the active energy ray-curable compositions A and B is applied on the cured object of the active energy ray-curable composition A.

The active energy ray-curable composition C is not particularly limited as long as it has a composition different from those of the active energy ray-curable compositions A and B and can be suitably selected to suit to a particular application. Preferably, the active energy ray-curable composition C contains a compound having a polymerizable functional group that can be cured by an active energy ray.

The composition C applying device is configured to apply the active energy ray-curable composition C different from the compositions A and B, on the cured object of the active energy ray-curable composition A.

As the composition C applying device, the same device as the composition A applying device can be used.

In the composition C curing process, the active energy ray-curable composition C is cured.

The composition C curing device is configured to cure the active energy ray-curable composition C.

As the composition C curing device, the same device as the composition A curing device can be used.

The composition C applying process and the composition C curing process can be executed after the composition A curing process and before the composition B applying process to form an image having a structure in which the cured object of the composition A, the cured object of the composition C, and the cured object of the composition B are laminated in this order.

Also, the composition C applying process and the composition C curing process can be executed after the composition B curing process to form an image having a structure in which the cured object of the composition A, the cured object of the composition B, and the cured object of the composition C are laminated in this order.

Here, as an example of the image forming apparatus, an example of an inkjet device will be explained as the application device for the compositions A and B, and an example of an apparatus having an irradiation portion for emitting an active energy ray will be explained as the curing device for the compositions A and B.

As an image forming apparatus, an apparatus having a head unit for discharging an active energy ray-curable composition and an irradiation portion that emits an active energy ray for curing the active energy ray-curable composition discharged from the head unit can be used to apply the active energy ray-curable composition.

By controlling the turn-on and turn-off of the irradiation portion, it is possible to irradiate and cure the active energy ray-curable composition either immediately after the application of the composition or after a certain period of time.

For example, in a device in which the head unit and the irradiation portion are connected to each other, the active energy ray-curable composition can be cured immediately after the application of the composition by discharging the composition from the head unit while the irradiation portion is continuously turned on.

To prevent the applied active energy ray-curable composition from being irradiated with the active energy ray, the active energy ray-curable composition is discharged from the head unit while the irradiation portion is turned off, and then the irradiation portion is turned on to emit the active energy ray. In this way, the composition can be cured after a certain period of time from the application of the composition.

Next, the image forming method and the image forming apparatus according to an embodiment of the present invention will be explained with reference to the figures.

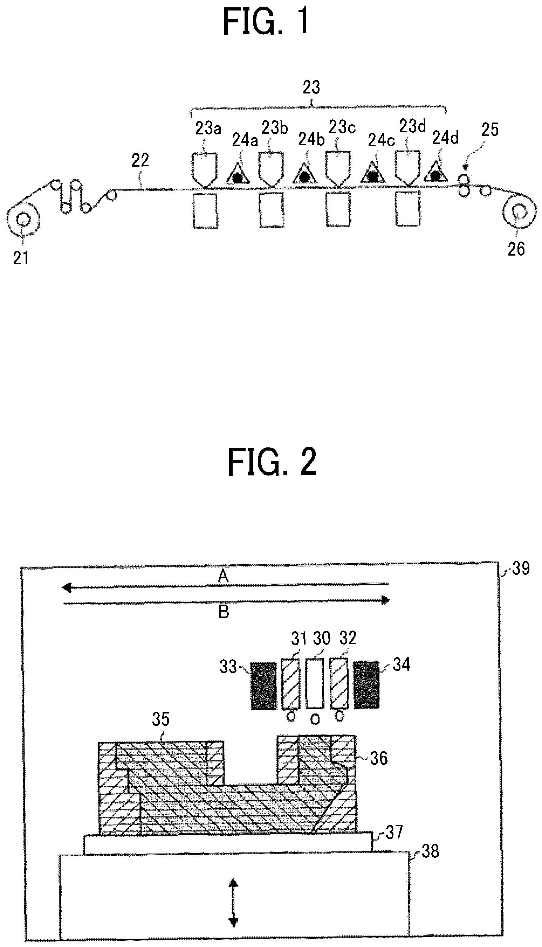

FIG. 1 is a diagram illustrating an example of an image forming apparatus equipped with an inkjet discharging device.

In the image forming apparatus according to an embodiment of the present invention, colored active energy ray-curable inks of yellow, magenta, cyan, black, etc. are represented by the active energy ray-curable compositions A, B₁, B₂, B₃, etc. respectively, and each of the compositions can be sequentially applied on each cured object of each composition to prepare a laminate structure.

This image forming apparatus includes color printing units 23a, 23b, 23c, and 23d of each color. The color printing units 23a, 23b, 23c, and 23d include respective discharge heads and respective ink cartridges containing respective active energy ray-curable inks having yellow, magenta, cyan, and black colors. The inks are discharged to a recording medium 22 supplied from a supply roller 21.

Then, light sources 24a, 24b, 24c, and 24d emit active energy rays to cure the inks to form a color image.

Thereafter, the recording medium 22 is conveyed to a processing unit 25 and a printed object reeling roll 26.

Each of the printing units 23a, 23b, 23c, and 23d may be equipped with a warmer for liquefying the ink on an ink discharging portion. Furthermore, the printing units 23a, 23b, 23c, and 23d may be equipped with a cooler for cooling the recording medium to room temperature either with or without contacting the recording medium.

The inkjet recording process of this image forming apparatus may employ either a serial method or a line method. In the serial method, ink is discharged from a moving head onto a recording medium that is intermittently moved in accordance with the width of the discharge head. In the line method, the ink is discharged from a head fixed on a certain position onto a recording medium that is continuously moved.

Without particular limitation, the recording medium 22 may be made of paper, film, metal, or a composite material thereof, each of which may be in the form of a sheet. The image forming apparatus may be configured to allow either one-side printing or duplex printing.

According to some embodiments, active energy rays emitted from the light sources 24a, 24b, and 24c may be weakened or omitted, and an active energy ray may be emitted from the light source 24d after multiple color images have been printed. As a result, energy consumption and cost can be reduced.

Recorded matters recorded by the ink according to an embodiment of the present invention include those printed on smooth surfaces such as normal paper and resin films, those printed on irregular surfaces, and those printed on surfaces made of various materials such as metal and ceramics. In addition, by laminating layers of two-dimensional images, a partially stereoscopic image (formed of two-dimensional part and three-dimensional part) and a three-dimensional object can be fabricated.

FIG. 2 is a schematic diagram illustrating another example of the image forming apparatus (apparatus to fabricate a three-dimensional image) according to an embodiment of the present invention.

In an image forming apparatus 39 in FIG. 2, a first active energy ray-curable composition is discharged from a discharge head unit 30 for objects, and a second active energy ray-curable composition having a composition different from that of the first active energy ray-curable composition is discharged from discharge head units 31 and 32 for supports, by using a head unit (movable in the AB direction) where inkjet heads are arrayed. Each of these compositions is laminated while curing the compositions by ultraviolet irradiators 33 and 34 that are adjacent to the discharge head units 31 and 32.

More specifically, for example, the second active energy ray-curable composition is discharged onto an object supporting base 37 from the discharge head units 31 and 32 for supports, and irradiated with an active energy ray and solidified, to form a first support layer having a reservoir. Then, the first active energy ray-curable composition is discharged onto the reservoir from the discharge head unit 30 for objects, and irradiated with an active energy ray and solidified, to form a first object layer. This process is repeated multiple times in accordance with the set number of lamination, while lowering a stage 38 that is movable in the vertical direction, to laminate the support layers and the object layers. Thus, a three-dimensional object 35 is obtained.

Thereafter, a support layer laminate 36 is optionally removed.

In FIG. 2, although one discharge head unit 30 for objects is depicted for convenience of drawing, the image forming apparatus according to an embodiment of the present invention has two or more discharge head units 30 for objects. For example, the discharge head unit 30 for objects illustrated in FIG. 2 can include: a discharge head unit 30A for objects, that discharges the active energy ray-curable composition A; a discharge head unit 30B₁ for objects, that discharges an active energy ray-curable composition B₁; a discharge head unit 30B₂ for objects, that discharges an active energy ray-curable composition B₂; and a discharge head unit 30B₃ for objects, that discharges an active energy ray-curable composition B₃. The compositions discharged (applied) from these discharge head units 30 for objects are cured by the ultraviolet irradiators to form cured objects of the respective compositions. By using the image forming apparatus illustrated in FIG. 2, the dispersion (application) and the curing of each active energy ray-curable composition can be repeated to form an object layer.

### <Use Application>

The use application of the active energy ray-curable composition according to an embodiment of the present invention is not particularly limited as long as the composition is used in a field where an active energy ray-curable material is generally used, and can be suitably selected to suit to a particular application. The active energy ray-curable composition can be applied to, for example, modeling resins, paints, adhesives, insulating materials, release agents, coating materials, sealing materials, resists, and optical materials.

Furthermore, the active energy ray-curable composition according to an embodiment of the present invention can be applied to inks for forming two-dimensional texts and images, and design coatings on various bases, as well as to materials for forming three-dimensional images (i.e., three-dimensional objects). The materials for forming three-dimensional objects can be used e.g. as a binder for binding powder particles in a powder layer laminating method that forms a three-dimensional object by repeatedly curing and laminating powder layers, and as a three-dimensional object constituent material (model material) and a supporting member (support material) for use in a laminate shaping method (optical shaping method) as illustrated in FIG. 2.

### (Active Energy Ray-Curable Composition Set>

An active energy ray-curable composition set according to an embodiment of the present invention can include the active energy ray-curable composition A containing a polymerizable monomer having a phosphoric ester group and a polyester resin, and the active energy ray-curable composition B containing a multifunctional polymerizable compound having two or more polymerizable functional groups in its molecule, and optionally other materials.

The active energy ray-curable composition A and the active energy ray-curable composition B in the active energy ray-curable composition set according to an embodiment of the present invention are the same as those described for the image forming method and the image forming apparatus according to an embodiment of the present invention.

### EXAMPLES

Hereinafter, Examples of the present invention will be described. However, the scope of the present invention is not limited to Examples in any way.

### (Preparation of Pigment Dispersion)

### [Preparation of Black Pigment Dispersion]

A 300-mL ball mill filled with zirconia beads having a diameter of 2 mm (filling rate: 43% by volume) was charged with 15 parts by mass of black pigment (trade name: MOGUL^{®}-E (carbon black), manufactured by Orion inc.), 5 parts by mass of dispersant (trade name: BYK^{®}167, manufactured by BYK Additives & Instruments), and 80 parts by mass of tetrahydrofurfuryl acrylate (manufactured by OSAKA ORGANIC CHEMICAL INDUSTRY LTD.), which were dispersed at 70 rpm and at 25°C for 180 hours to prepare a black pigment dispersion.

### [Preparation of White Pigment Dispersion]

A 500-mL ball mill filled with zirconia beads having a diameter of 2 mm (filling rate: 45% by volume) was charged with 110 parts by mass of titanium oxide A (trade name: TCR-52, manufactured by Sakai Chemical Industry Co., Ltd., surface treatment: Al₂O₃), 10 parts by mass of BYKJET^{®}-9151 (manufactured by BYK Japan KK), and 100 parts by mass of tetrahydrofurfuryl acrylate (manufactured by OSAKA ORGANIC CHEMICAL INDUSTRY LTD.), which were dispersed at 70 rpm and at 25°C for 48 hours.

Subsequently, the mixture was put into a 1L-sand mill filled with zirconia beads having a diameter of 0.1 mm (filling rate: 80% by volume), and dispersed at 25°C and at a circumferential velocity of 8 m/sec for 3 hours to prepare a white pigment dispersion.

### (Preparation Examples A-1 to A-23)

### - Preparation of Active Energy Ray-Curable Compositions A-1 to A-23 -

The compositions presented in Tables 1 to 5 were mixed and stirred in a routine procedure to prepare active energy ray-curable compositions A-1 to A-23.

Specifically, first, each monomer, a polyester resin, a polymerization inhibitor, and a surfactant, as well as optionally a pigment dispersion were mixed and stirred to dissolve the polyester resin and the polymerization inhibitor. Next, the polymerization initiator was added to the mixture, which was mixed and stirred to dissolve the polymerization initiator to obtain an active energy ray-curable composition A.

Stirring was performed using a stirrer THREE-ONE MOTOR^{®} (manufactured by Shinto Scientific Co., Ltd) at normal temperature.

**Table 1**

| | | | Composition A | | | | |
|---|---|---|---|---|---|---|---|
| | | | A-1 | A-2 | A-3 | A-4 | A-5 |
| Polymerizable monomer having phosphoric acid group | | SR9051NS (trifunctional monomer) | 5.0 | 5.0 | 100 | 8.0 | 5.0 |
| | | SR9050NS (monofunctional monomer) | - | - | - | - | - |
| | | LIGHTACRYLATEP-1A(N) (monofunctional monomer) | - | - | - | - | - |
| Polyester resin | | UVAD-081 (number average molecular weight: 1,400, including unsaturated bonds) | 9.0 | 9.0 | 9.0 | 9.0 | 9.0 |
| | | UVAD-085 (number average molecular weight: 2,000, including unsaturated bonds) | - | - | - | - | - |
| | | VYLON GK-810 (number average molecular weight: 6,000, including no unsaturated bonds) | - | - | - | - | - |
| | | VYLON 802 (number average molecular weight: 3,000, including no unsaturated bonds) | - | - | - | - | - |
| Other monofunctional monomers | | THFA (tetrahydrofurfuryl acrylate, VISCOAT #150) | 38 | 35 | 35 | 6 | 25 |
| | | CTFA (cyclic trimethylolpropane formal monoacrylate, VISCOAT #200) | 38 | 14 | 9 | - | 20 |
| Multifunctional compound | Bifunctional monomer | DPGDA (dipropylene glycol diacrylate) | - | - | - | 30 | 21 |
| | Trifunctional monomer | TMPTA (trimethylolpropane triacrylate, VISCOAT #295) | - | - | - | 10 | 10 |
| Polymerization initiator | | OMNIRAD TPO | 6.7 | 6.7 | 6.7 | 6.7 | 6.7 |
| | | OMNIRAD T819 | 2.9 | 2.9 | 2.9 | 2.9 | 2.9 |
| Polymerization inhibitor | | BHT | 0.1 | 0.1 | 0.1 | 0.1 | 0.1 |
| Surfactant | | WET270 | 0.1 | 0.1 | 0.1 | 0.1 | 0.1 |
| Pigment dispersion | | Black pigment dispersion | - | - | - | - | - |
| | | White pigment dispersion | - | 27 | 27 | 27 | - |
| Total | | | 100 | 100 | 100 | 100 | 100 |

**Table 2**

| | | | Composition A | | | | |
|---|---|---|---|---|---|---|---|
| | | | A-6 | A-7 | A-8 | A-9 | A-10 |
| Polymerizable monomer having phosphoric acid group | | SR9051NS (trifunctional monomer) | 5.0 | 5.0 | 5.0 | 5.0 | 100 |
| | | SR9050NS (monofunctional monomer) | - | - | - | - | - |
| | | LIGHTACRYLATE P-1A(N) (monofunctional monomer) | - | - | - | - | - |
| Polyester resin | | UVAD-081 (number average molecular weight: 1,400, including unsaturated bonds) | 9.0 | 3.0 | 12.0 | 17.0 | 9.0 |
| | | UVAD-085 (number average molecular weight: 2,000, including unsaturated bonds) | - | - | - | - | - |
| | | VYLONGK-810 (number average molecular weight: 6,000, including no unsaturated bonds) | - | - | - | - | - |
| | | VYLON 802 (number average molecular weight: 3,000, including no unsaturated bonds) | - | - | - | - | - |
| Other monofunctional monomers | | THFA (tetrahydrofurfuryl acrylate, VISCOAT #150) | 31 | 42 | 38 | 35 | 36 |
| | | CTFA (cyclic trimethylolpropane formal monoacrylate, VISCOAT #200) | 25 | 40 | 35 | 33 | 35 |
| Multifunctional compound | Bifunctional monomer | DPGDA (dipropylene glycol diacrylate) | 15 | - | - | - | - |
| | Trifunctional monomer | TMPTA (trimethylolpropane triacrylate, VISCOAT #295) | 5 | - | - | - | - |
| Polymerization initiator | | OMNIRAD TPO | 6.7 | 6.7 | 6.7 | 6.7 | 6.7 |
| | | OMNIRAD T819 | 2.9 | 2.9 | 2.9 | 2.9 | 2.9 |
| Polymerization inhibitor | | BHT | 0.1 | 0.1 | 0.1 | 0.1 | 0.1 |
| Surfactant | | WET270 | 0.1 | 0.1 | 0.1 | 0.1 | 0.1 |
| Pigment dispersion | | Black pigment dispersion | - | - | - | - | - |
| | | White pigment dispersion | - | - | - | - | - |
| Total | | | 100 | 100 | 100 | 100 | 100 |

**Table 3**

| | | | Composition A | | | | |
|---|---|---|---|---|---|---|---|
| | | | A-11 | A-12 | A-13 | A-14 | A-15 |
| Polymerizable monomer having phosphoric acid group | | SR9051NS (trifunctional monomer) | 8.0 | - | - | 5.0 | 5.0 |
| | | SR9050NS (monofunctional monomer) | - | 100 | - | - | - |
| | | LIGHTACRYLATE P-1A(N) (monofunctional monomer) | - | - | 100 | - | - |
| Polyester resin | | UVAD-081 (number average molecular weight: 1,400, including unsaturated bonds) | 9.0 | 9.0 | 9.0 | - | 9.0 |
| | | UVAD-085 (number average molecular weight: 2,000, including unsaturated bonds) | - | - | - | 9.0 | - |
| | | VYLON GK-810 (number average molecular weight: 6,000, including no unsaturated bonds) | - | - | - | - | - |
| | | VYLON 802 (number average molecular weight: 3,000, including no unsaturated bonds) | - | - | - | - | - |
| Other monofunctional monomers | | THFA (tetrahydrofurfuryl acrylate, VISCOAT #150) | 38 | 36 | 36 | 38 | 38 |
| | | CTFA (cyclic trimethylolpropane formal monoacrylate, VISCOAT #200) | 35 | 35 | 35 | 38 | 38 |
| Multifunctional compound | Bifunctional monomer | DPGDA (dipropylene glycol diacrylate) | - | - | - | - | - |
| | Trifunctional monomer | TMPTA (trimethylolpropane triacrylate, VISCOAT #295) | - | - | - | - | - |
| Polymerization initiator | | OMNIRAD TPO | 6.7 | 6.7 | 6.7 | 6.7 | 6.7 |
| | | OMNIRAD T819 | 2.9 | 2.9 | 2.9 | 2.9 | 2.9 |
| Polymerization inhibitor | | BHT | 0.1 | 0.1 | 0.1 | 0.1 | 0.1 |
| Surfactant | | WET270 | 0.1 | 0.1 | 0.1 | 0.1 | - |
| Pigment dispersion | | Black pigment dispersion | - | - | - | - | - |
| | | White pigment dispersion | - | - | - | - | - |
| Total | | | 100 | 100 | 100 | 100 | 100 |

**Table 4**

| | | | Composition A | | | | |
|---|---|---|---|---|---|---|---|
| | | | A-16 | A-17 | A-18 | A-19 | A-20 |
| Polymerizable monomer having phosphoric acid group | | SR9051NS (trifunctional monomer) | 8.0 | 100 | - | 5.0 | - |
| | | SR9050NS (monofunctional monomer) | - | - | - | - | - |
| | | LIGHTACRYLATE P-1A(N) (monofunctional monomer) | - | - | - | - | - |
| Polyester resin | | UVAD-081 (number average molecular weight: 1,400, including unsaturated bonds) | 9.0 | 9.0 | - | - | 9.0 |
| | | UVAD-085 (number average molecular weight: 2,000, including unsaturated bonds) | - | - | - | - | - |
| | | VYLONGK-810 (number average molecular weight: 6,000, including no unsaturated bonds) | - | - | - | - | - |
| | | VYLON 802 (number average molecular weight: 3,000, including no unsaturated bonds) | - | - | - | - | - |
| Other monofunctional monomers | | THFA (tetrahydrofurfuryl acrylate, VISCOAT #150) | 6.0 | 36 | 50 | 45 | 38 |
| | | CTFA (cyclic trimethylolpropane formal monoacrylate, VISCOAT #200) | - | 35 | 40 | 40 | 43 |
| Multifunctional compound | Bifunctional monomer | DPGDA (dipropylene glycol diacrylate) | 30 | - | - | - | - |
| | Trifunctional monomer | TMPTA (trimethylolpropane triacrylate, VISCOAT #295) | 10 | - | - | - | - |
| Polymerization initiator | | OMNIRAD TPO | 6.7 | 6.7 | 6.7 | 6.7 | 6.7 |
| | | OMNIRAD T819 | 2.9 | 2.9 | 2.9 | 2.9 | 2.9 |
| Polymerization inhibitor | | BHT | 0.1 | 0.1 | 0.1 | 0.1 | 0.1 |
| Surfactant | | WET270 | - | - | 0.1 | 0.1 | 0.1 |
| Pigment dispersion | | Black pigment dispersion | - | - | - | - | - |
| | | White pigment dispersion | 27 | - | - | - | - |
| Total | | | 100 | 100 | 100 | 100 | 100 |

**Table 5**

| | | | Composition A | | |
|---|---|---|---|---|---|
| | | | A-21 | A-22 | A-23 |
| Polymerizable monomer having phosphoric acid group | | SR9051NS (trifunctional monomer) | 5.0 | 5.0 | 15.0 |
| | | SR9050NS (monofunctional monomer) | - | - | - |
| | | LIGHTACRYLATEP-1A(N) (monofunctional monomer) | - | - | - |
| Polyester resin | | UVAD-081 (number average molecular weight: 1,400, including unsaturated bonds) | - | - | - |
| | | UVAD-085 (number average molecular weight: 2,000, including unsaturated bonds) | - | - | - |
| | | VYLON GK-810 (number average molecular weight: 6,000, including no unsaturated bonds) | - | 9 | - |
| | | VYLON 802 (number average molecular weight: 3,000, including no unsaturated bonds) | 9 | - | - |
| Other monofunctional monomers | | THFA (tetrahydrofurfuryl acrylate, VISCOAT #150) | 38 | 38 | 38 |
| | | CTFA (cyclic trimethylolpropane formal monoacrylate, VISCOAT #200) | 38 | 38 | 37 |
| Multifunctional compound | Bifunctional monomer | DPGDA (dipropylene glycol diacrylate) | - | - | - |
| | Trifunctional monomer | TMPTA (trimethylolpropane triacrylate, VISCOAT #295) | - | - | - |
| Polymerization initiator | | OMNIRAD TPO | 6.7 | 6.7 | 6.7 |
| | | OMNIRAD T819 | 2.9 | 2.9 | 2.9 |
| Polymerization inhibitor | | BHT | 0.1 | 0.1 | 0.1 |
| Surfactant | | WET270 | 0.1 | 0.1 | 0.1 |
| Pigment dispersion | | Black pigment dispersion | - | - | - |
| | | White pigment dispersion | - | - | - |
| Total | | | 100 | 100 | 100 |

### (Preparation Examples B-1 to B-11)

### - Preparation of Active Energy Ray-Curable Compositions B-1 to B-11 -

The compositions presented in Tables 6 and 7 were mixed and stirred in a routine procedure to prepare active energy ray-curable compositions B-1 to B-11.

Specifically, first, each polymerizable compound, a polymerization inhibitor, and a surfactant, as well as, optionally a pigment dispersion were mixed and stirred. Subsequently, a polymerization initiator was added to the mixture, and mixed and stirred to dissolve the polymerization initiator to obtain an active energy ray-curable composition B.

Stirring was performed using a stirrer THREE-ONE MOTOR^{®} (manufactured by Shinto Scientific Co., Ltd) at normal temperature.

**Table 6**

| | | | Composition B | | | | |
|---|---|---|---|---|---|---|---|
| | | | B-1 | B-2 | B-3 | B-4 | B-5 |
| Monofunctional polymerizable compound | Monofunctional monomer | THFA (tetrahydrofurfuryl acrylate, VISCOAT #150) | 7.5 | - | | 15 | 100 |
| | | CTFA (cyclic trimethylolpropane formal monoacrylate, VISCOAT #200) | 38 | - | - | 15 | 9 |
| Multifunctional polymerizable compound | Bifunctional monomer | DPGDA (dipropylene glycol diacrylate) | - | 51 | 39 | 35 | 43 |
| | Trifunctional monomer | TMPTA (trimethylolpropane triacrylate, VISCOAT #295) | 40 | 25 | 23 | 25 | 28 |
| | Hexafunctional monomer | DPHA (dipentaerythritol hexaacrylate) | - | - | - | - | - |
| Other monofunctional polymerizable compound | Urethane acrylate origomer | KRM8667 | 5 | - | - | - | - |
| Polymerization initiator | | OMNIRAD TPO | 7.0 | 7.0 | 7.0 | 7.0 | 7.0 |
| | | OMNIRAD 819 | 2.5 | 3.5 | 3.5 | 2.5 | 2.5 |
| Polymerization inhibitor | | BHT | 0.1 | 0.1 | 0.1 | 0.1 | 0.1 |
| Surfactant | | Rad2300 | 0.1 | - | - | 0.1 | 0.1 |
| Pigment dispersion | | Black pigment dispersion | - | 13 | - | - | - |
| | | White pigment dispersion | - | - | 27 | - | - |
| Total (parts by mass) | | | 100 | 100 | 100 | 100 | 100 |
| Total amount of multifunctional polymerizable compound (% by mass) | | | 45 | 76 | 62 | 60 | 71 |

**Table 7**

| | | | Composition B | | | | | |
|---|---|---|---|---|---|---|---|---|
| | | | B-6 | B-7 | B-8 | B-9 | B-10 | B-11 |
| Monofunctional polymerizable compound | Monofunctional monomer | THFA (tetrahydrofurfuryl acrylate, VISCOAT #150) | 8.0 | 7.5 | 15 | 7.5 | 42 | 10.0 |
| | | CTFA (cyclic trimethylolpropane format monoacrylate, VISCOAT #200) | - | 38 | 32 | 38 | 48 | - |
| Multifunctional polymerizable compound | Bifunctional monomer | DPGDA (dipropylene glycol diacrylate) | 50 | - | 35 | 45 | - | 50 |
| | Trifunctional monomer | TMPTA (trimethylolpropane triacrylate, VISCOAT #295) | 32 | 45 | - | - | - | 30 |
| | Hexafunctional monomer | DPHA (dipentaerythritol hexaacrylate) | - | - | 8 | - | - | - |
| Other monofunctional polymerizable compound | Urethane acrylate origomer | KRM8667 | - | - | - | - | - | - |
| Polymerization initiator | | OMNIRAD TPO | 7.0 | 7.0 | 7.0 | 7.0 | 7.0 | 7.0 |
| | | OMNIRAD 819 | 2.5 | 2.5 | 2.5 | 2.5 | 2.5 | 2.5 |
| Polymerization inhibitor | | BHT | 0.1 | 0.1 | 0.1 | 0.1 | 0.1 | 0.1 |
| Surfactant | | Rad2300 | 0.1 | 0.1 | 0.1 | 0.1 | 0.1 | 0.1 |
| Pigment dispersion | | Black pigment dispersion | - | - | - | - | - | - |
| | | White pigment dispersion | - | - | - | - | - | - |
| Total (parts by mass) | | | 100 | 100 | 100 | 100 | 100 | 100 |
| Total amount of multifunctional polymerizable compound (% by mass) | | | 82 | 45 | 43 | 45 | 0 | 80 |

The materials used in the preparation of the active energy ray-curable compositions A and B are described in detail below.

### [Polymerizable Monomer Having Phosphoric Ester Group]

- SR9051NS: manufactured by SARTOMER LLC, number of polymerizable functional groups: 3
- SR9050NS: manufactured by SARTOMER LLC, number of polymerizable functional groups: 1
- LIGHTACRYLATE^{®} P-1A (N): manufactured by KYOEISYA K.K., number of polymerizable functional groups: 1, compound name: 2-acryloyloxyethyl acid phosphate

### [Polyester Resin]

- UVAD-081: manufactured by OSAKA SODA CO., LTD., number average molecular weight: 1,400, a polyester resin having unsaturated bonds
- UVAD-085: manufactured by OSAKA SODA CO., LTD., number average molecular weight: 2,000, a polyester resin having unsaturated bonds

### [Other Polymerizable Compounds]

- Tetrahydrofurfuryl acrylate: VISCOAT^{®} #150, manufactured by OSAKA ORGANIC CHEMICAL INDUSTRY LTD.
- Cyclic trimethylolpropane formal monoacrylate: VISCOAT^{®} #200, manufactured by OSAKA ORGANIC CHEMICAL INDUSTRY LTD.
- Dipropylene glycol diacrylate: manufactured by Tokyo Chemical Industry Co., Ltd.
- Trimethylolpropane triacrylate: VISCOAT^{®} #295, manufactured by OSAKA ORGANIC CHEMICAL INDUSTRY LTD.
- Dipentaerythritol hexaacrylate: manufactured by DAICEL-ALLNEX LTD.
- KRM^{®} 8667: urethane acrylate oligomer, manufactured by DAICEL-ALLNEX LTD.

### [Polymerization Initiator]

OMNIRAD^{®} TPO: manufactured by IGM Resins B.V.
OMNIRAD^{®} 819: manufactured by IGM Resins B.V.

### [Polymerization Inhibitor]

- BHT: manufactured by Tokyo Chemical Industry Co., Ltd. [surfactant]
- TEGO^{®} WET270, TEGO^{®} Rad2300, manufactured by Evonik Industries AG

### (Example 1)

Evaluation samples (printed object 1) were prepared by using the composition A of Preparation Example A-1 and the compositions B of Preparation Examples B-1 to B-3, for the following sections "Printer", "Application Condition and Curing Condition of Active Energy Ray-Curable Composition A", and "Application Condition and Curing Condition of Active Energy Ray-Curable Composition B".

### [Printer]

Each active energy ray-curable composition was charged into an inkjet printer equipped with an inkjet head MH5420 (manufactured by RICOH COMPANY, LTD.) and a metal halide lamp (illuminance: 1 W/cm²) manufactured by USHIO INC. For this inkjet printer, a printing speed was set to 0.8 m/s.

### <Application Condition and Curing Condition of Active Energy Ray-Curable Composition A>

### [Application Condition of Active Energy Ray-Curable Composition A]

The active energy ray-curable composition A was applied on a glass base (S9213, manufactured by Matsunami Glass Ind., Ltd.) so as to print a solid image of 4 cm square under a print condition of 1 mm of gap between the head and the base surface, 1.5 mg/cm² of deposition amount, 600 dpi×1200 dpi of resolution, 8 paths, and bidirectional printing.

### [Curing Condition of Active Energy Ray-Curable Composition A]

The active energy ray-curable composition A was applied on a base, and after 10 seconds, a metal halide lamp was turned on, and a carriage was caused to scan while the active energy ray-curable composition A was not being applied (the composition was not being discharged from the head) to irradiate the printed solid image (image of the composition A-1) with an active energy ray to cure the solid image. That means, the composition A was applied on the base, and after a certain period of time, the composition A was cured.

In this example, this curing condition is expressed as "gloss".

### <Application Condition and Curing Condition of Active Energy Ray-Curable Composition B>

As for the active energy ray-curable composition B, the active energy ray-curable compositions B-3, B-2, and B-1 were applied and cured in this order on the cured object of the active energy ray-curable composition A-1, as described below.

### [Application Condition of Active Energy Ray-Curable Composition B-3]

Under the same application condition as for the active energy ray-curable composition A, the active energy ray-curable composition B-3 was applied on the cured object of the active energy ray-curable composition A-1.

### [Curing Condition of Active Energy Ray-Curable Composition B-3]

Immediately after the active energy ray-curable composition B-3 was applied on the cured object of the active energy ray-curable composition A-1, a metal halide lamp was turned on, and a carriage was caused to scan while the active energy ray-curable composition was being applied (the composition was being discharged from the head) to irradiate the printed solid image (image of the active energy ray-curable composition B-3) with an active energy ray to cure the solid image. In other words, without any time after the active energy ray-curable composition B-3 was applied on the cured object (layer) of the active energy ray-curable composition A-1, the active energy ray-curable composition B-3 was cured.

In this example, this curing condition is expressed as "matte".

### [Application Condition of Active Energy Ray-Curable Composition B-2]

Under the same application condition as for the active energy ray-curable composition A, the active energy ray-curable composition B-2 was applied on the cured object of the active energy ray-curable composition B-3.

### [Curing Condition of Active Energy Ray-Curable Composition B-2]

Under the same curing condition (matte) as for the active energy ray-curable composition B-3, the active energy ray-curable composition B-2 was cured without any time after the active energy ray-curable composition B-2 was applied on the cured object (layer) of the active energy ray-curable composition B-3.

### [Application Condition of Active Energy Ray-Curable Composition B-1]

Under the same application condition as for the active energy ray-curable composition A, the active energy ray-curable composition B-1 was applied on the cured object of the active energy ray-curable composition B-2.

### [Curing Condition of Active Energy Ray-Curable Composition B-1]

Under the same curing condition (gloss) as for the active energy ray-curable composition A-1, the active energy ray-curable composition B-1 was applied on the cured object (layer) of the active energy ray-curable composition B-2, and then, after a certain period of time, the active energy ray-curable composition B-1 was cured.

In Example 1, layers were formed by laminating the cured objects of the active energy ray-curable compositions A-1, B-3, B-2, and B-1 in this order on the base to produce a printed object with four laminated layers of the cured objects of the active energy ray-curable compositions. In other words, in Example 1, the produced printed object had a laminate structure in which the base, and the cured objects of the respective active energy ray-curable compositions A-1, B-3, B-2, and B-1 are laminated in this order.

In this example, the image printed under the "gloss" curing condition satisfies a condition that a "60° gloss" value is 80 or higher as measured by the following method. In addition, the image printed under the "matte" curing condition satisfies a condition that a "60° gloss" value is 30 or lower as measured by the following method.

### - 60° Gloss Measurement Method -

Ten sheets of TP PAPER (manufactured by NBS RICOH) were stacked, on which an evaluation sample was placed, and the 60° gloss was measured using MICRO-TRI-GLOSS^{®} 4446 (manufactured by BYK Additives & Instruments).

The "60° gloss" of the active energy ray-curable composition A is expressed as a result of measuring a separately prepared evaluation sample consisting only of the cured object of the active energy ray-curable composition A on the basis of the conditions described in the section "Application Condition of Active Energy Ray-Curable Composition A" and the section "Curing Condition of Active Energy Ray-Curable Composition A".

The "60° gloss" of the active energy ray-curable composition B is expressed as a result of measuring the "60° gloss" of the layer of the active energy ray-curable composition B formed on the topmost layer of the evaluation sample (final printed object).

### (Examples 2 to 39, and Comparative Examples 1 to 6)

Printed objects (evaluation samples) 2 to 45 were prepared in the same manner as in Example 1 except that the compositions in Example 1 were replaced by active energy ray-curable compositions A-1 to A-23 and active energy ray-curable compositions B-1 to B-11 in combinations described in Tables 8 to 14, and the printing methods were changed to the printing methods described in Tables 8 to 14.

Note that one to three layers of the active energy ray-curable composition B were printed for each of Examples and Comparative Examples. When two or more layers of the active energy ray-curable composition B were printed, the composition was cured for each layer.

The printing method of the active energy ray-curable composition B on the layers other than the topmost layer was executed under the "matte" condition.

The printing method of the composition B on the topmost layer described in Tables 8 to 14 means a printing method in which, when the active energy ray-curable composition A and the active energy ray-curable composition B are overlappingly printed, the active energy ray-curable composition B placed on the topmost layer is printed. For example, in the case of Example 1, the active energy ray-curable composition B on the topmost layer refers to the active energy ray-curable composition B-1. In the case of Example 5, the active energy ray-curable composition B on the topmost layer refers to the active energy ray-curable composition B-4.

Subsequently, for printed objects (evaluation samples) 1 to 45 obtained in Examples 1 to 39 and Comparative Examples 1 to 6, "initial scratch resistance", "scratch resistance after immersion in hot water", "scratch resistance after immersion in ethanol", and "scratch resistance after immersion in alkaline solution" were evaluated, and "discharge stability" of the active energy ray-curable compositions A in Preparation Examples A-1 to A-23 was evaluated, as follows. The results are presented in Tables 8 to 14.

### (Initial Scratch Resistance)

The resulting printed objects (evaluation samples) were subjected to a pencil hardness test in accordance with JIS K5600-5-4 (scratch hardness: pencil method) and evaluated for image peeling in accordance with the following evaluation criteria. An evaluation result of "C" or better indicates no problem in actual use.

Note that a pencil hardness in this test means a hardness at which the image is not peeled off as a result of the evaluation. For example, in evaluation of a sample, if the image is not peel off at hardness of 5H but peeled off at hardness of 6H, a pencil hardness of the sample is "5H" and the sample is rated as "A". The "image peeling" in the evaluation criteria means a case where either the "cured object of the active energy ray-curable composition A" or the "cured object of the active energy ray-curable composition B" is peeled off.

### [Evaluation Criteria]

S: Pencil hardness is 6H or higher
A: Pencil hardness is 4H or higher and 5H or lower
B: Pencil hardness is 2H or higher and 3H or lower
C: Pencil hardness is F or higher and H or lower
D: Pencil hardness is HB or lower

### (Scratch Resistance after Immersion in Hot Water)

The resulting printed object (evaluation sample) was immersed in hot water heated to 90°C and 80°C respectively for 20 minutes such that the whole image area and base were immersed.

After the immersion, the printed object (evaluation sample) was taken out, and promptly water droplets on the image surface were wiped off. The sample was subjected to a pencil hardness test in accordance with JIS K5600-5-4 (scratch hardness: pencil method) and evaluated for image peeling in accordance with the following evaluation criteria. An evaluation result of "C" or better indicates no problem in actual use.

Note that a pencil hardness in this test means a hardness at which the image is not peeled off as a result of the evaluation. For example, in evaluation of a sample, if the image is not peel off at hardness of 5H but peeled off at hardness of 6H, a pencil hardness of the sample is "5H" and the sample is rated as "A". The "image peeling" in the evaluation criteria means a case where either the "cured object of the active energy ray-curable composition A" or the "cured object of the active energy ray-curable composition B" is peeled off.

### [Evaluation Criteria]

S: Pencil hardness is 6H or higher
A: Pencil hardness is 4H or higher and 5H or lower
B: Pencil hardness is 2H or higher and 3H or lower
C: Pencil hardness is F or higher and H or lower
D: Pencil hardness is HB or lower

### (Scratch Resistance after Immersion in Ethanol)

The "scratch resistance after immersion in ethanol" was evaluated in accordance with the following evaluation criteria in the same manner as in "Scratch Resistance after Immersion in Hot Water" except that hot water (water at 90°C or 80°C) in "Scratch Resistance after Immersion in Hot Water" was replaced by 50 mass%-ethanol aqueous solution prepared by diluting 99.5%-ethanol (manufactured by Kanto Chemical Industry Co., Ltd.) with ion-exchanged water, and the sample was immersed for 1 hour. An evaluation result of "C" or better indicates no problem in actual use.

### [Evaluation Criteria]

S: Pencil hardness is 6H or higher
A: Pencil hardness is 4H or higher and 5H or lower
B: Pencil hardness is 2H or higher and 3H or lower
C: Pencil hardness is F or higher and H or lower
D: Pencil hardness is HB or lower

### (Scratch Resistance after Immersion in Alkaline Solution)

The resulting printed object (evaluation sample) was immersed in 3 mass%-sodium hydroxide aqueous solution heated to 80°C for 20 minutes such that the whole image area and base were immersed. The 3 mass%-sodium hydroxide aqueous solution was prepared by dissolving sodium hydroxide (manufactured by Kanto Chemical Industry Co., Ltd.) in ion-exchanged water.

After the immersion, the printed object (evaluation sample) was taken out, and promptly water droplets on the image surface were wiped off. The sample was subjected to a tape peel test.

In the tape peel test, a tape (CT-24, manufactured by NICHIBAN CO.,LTD.) was stuck to the image area and strongly pressed, and then removed in the direction forming an angle of 90° relative to the image surface quickly and in one movement. The image surface from which the tape had been removed was visually observed and evaluated in accordance with the following evaluation criteria. The "image peeling" in the evaluation criteria means a case where either the "cured object of the active energy ray-curable composition A" or the "cured object of the active energy ray-curable composition B" is peeled off.

### [Evaluation Criteria]

Excellent: No image peeling is observed after removal of the tape
Good: Slight image peeling is observed after removal of the tape
Poor: Image peeling is observed over the entire surface after removal of the tape, or image peeling is observed during immersion in an alkaline solution

### <Discharge Stability of Active Energy Ray-Curable Composition A>

An expanded applicator EV2500 equipped with an inkjet head MH5420 (manufactured by RICOH COMPANY, LTD.) was charged with each of the active energy ray-curable compositions in Preparation Examples A-1 to A-20. A heater of the head was turned on to warm the composition in the head, and in this state, the composition was continually discharged for 30 minutes, meanwhile this discharge condition was observed by a camera and evaluated in accordance with the following evaluation criteria.

The discharge condition was observed in one row of four rows of discharge ports.

### [Evaluation Criteria]

Good: The composition is discharged from all nozzles
Fair: The number of nozzles without discharge is 1 or more and less than 30
Poor: The number of nozzles without discharge is more than 30

**Table 8**

| | | | Examples | | | | | | |
|---|---|---|---|---|---|---|---|---|---|
| | | | 1 | 2 | 3 | 4 | 5 | 6 | 7 |
| Composition A | Type | | A-1 | A-1 | A-1 | A-1 | A-1 | A-1 | A-1 |
| | Printing method | | Gloss | Gloss | Gloss | Gloss | Gloss | Gloss | Matte |
| | 60° gloss of cured object (layer) | | 92 | 92 | 92 | 92 | 92 | 92 | 20 |
| Composition B | Type (in an order from the top layer to the vicinity of the composition A layer) | | B-3 | B-2 | B-3 | B-1 | B-4 | B-4 | B-3 |
| | | | B-2 | B-1 | B-1 | - | - | B-4 | B-2 |
| | | | B-1 | - | - | - | - | - | B-1 |
| | Printing method of the composition B on the topmost layer | | Gloss | Gloss | Gloss | Gloss | Gloss | Gloss | Gloss |
| | 60° gloss of the cured object (layer) of the composition B on the topmost layer | | 91 | 91 | 91 | 91 | 90 | 90 | 91 |
| Evaluation results | Initial scratch resistance | | S | S | S | A | A | S | S |
| | Scratch resistance | Hot water (90°C) | S | A | A | C | B | A | A |
| | | Hot water (80°C) | S | A | A | C | B | A | A |
| | | Ethanol | S | A | A | B | A | A | A |
| | | Alkali | Excellent | Excellent | Excellent | Excellent | Excellent | Excellent | Excellent |
| | Discharge stability of the composition A | | Good | Good | Good | Good | Good | Good | Good |

**Table 9**

| | | | Examples | | | | | | |
|---|---|---|---|---|---|---|---|---|---|
| | | | 8 | 9 | 10 | 11 | 12 | 13 | 14 |
| Composition A | Type | | A-2 | A-2 | A-3 | A-3 | A-4 | A-5 | A-6 |
| | Printing method | | Gloss | Matte | Gloss | Matte | Matte | Gloss | Gloss |
| | 60° gloss of cured object (layer) | | 92 | 20 | 91 | 21 | 20 | 91 | 92 |
| Composition B | Type (in an order from the top layer to the vicinity of the composition A layer) | | B-2 | B-2 | B-2 | B-2 | B-2 | B-3 | B-3 |
| | | | B-1 | B-1 | B-1 | B-1 | B-1 | B-2 | B-2 |
| | | | - | - | - | - | - | B-1 | B-1 |
| | Printing method of the composition B on the topmost layer | | Gloss | Gloss | Gloss | Gloss | Gloss | Gloss | Gloss |
| | 60° gloss of the cured object (layer) of the composition B on the topmost layer | | 91 | 91 | 91 | 91 | 91 | 91 | 91 |
| Evaluation results | Initial scratch resistance | | S | S | S | S | S | S | S |
| | Scratch resistance | Hot water (90°C) | A | B | S | S | B | C | B |
| | | Hot water (80°C) | A | B | S | S | B | C | B |
| | | Ethanol | A | A | S | S | B | B | A |
| | | Alkali | Excellent | Excellent | Excellent | Excellent | Good | Good | Excellent |
| | Discharge stability of the composition A | | Good | Good | Good | Good | Good | Good | Good |

**Table 10**

| | | | Examples | | | | | | |
|---|---|---|---|---|---|---|---|---|---|
| | | | 15 | 16 | 17 | 18 | 19 | 20 | 21 |
| Composition A | Type | | A-7 | A-8 | A-9 | A-10 | A-11 | A-12 | A-13 |
| | Printing method | | Gloss | Gloss | Gloss | Gloss | Gloss | Gloss | Gloss |
| | 60° gloss of cured object (layer) | | 92 | 92 | 91 | 92 | 91 | 91 | 92 |
| Composition B | Type (in an order from the top layer to the vicinity of the composition A layer) | | B-3 | B-3 | B-3 | B-3 | B-3 | B-3 | B-3 |
| | | | B-2 | B-2 | B-2 | B-2 | B-2 | B-2 | B-2 |
| | | | B-1 | B-1 | B-1 | B-1 | B-1 | B-1 | B-1 |
| | Printing method of the composition B on the topmost layer | | Gloss | Gloss | Gloss | Gloss | Gloss | Gloss | Gloss |
| | 60° gloss of the cured object (layer) of the composition B on the topmost layer | | 91 | 91 | 91 | 91 | 91 | 91 | 91 |
| Evaluation results | Initial scratch resistance | | S | S | S | S | S | S | S |
| | Scratch resistance | Hot water (90°C) | A | S | S | S | S | C | c |
| | | Hot water (80°C) | A | S | S | S | S | C | C |
| | | Ethanol | A | S | S | S | S | A | A |
| | | Alkali | Excellent | Excellent | Excellent | Excellent | Excellent | Excellent | Excellent |
| | Discharge stability of the composition A | | Good | Good | Fair | Good | Good | Good | Good |

**Table 11**

| | | | Examples | | | | | | |
|---|---|---|---|---|---|---|---|---|---|
| | | | 22 | 23 | 24 | 25 | 26 | 27 | 28 |
| Composition A | Type | | A-14 | A-1 | A-1 | A-1 | A-1 | A-1 | A-1 |
| | Printing method | | Gloss | Gloss | Gloss | Gloss | Gloss | Gloss | Gloss |
| | 60° gloss of cured object (layer) | | 92 | 92 | 92 | 92 | 92 | 92 | 92 |
| Composition B | Type (in an order from the top layer to the vicinity of the composition A layer) | | B-3 | B-5 | B-6 | B-7 | B-8 | B-9 | B-3 |
| | | | B-2 | - | - | - | - | - | B-2 |
| | | | B-1 | - | - | - | - | - | B-1 |
| | Printing method of the composition B on the topmost layer | | Gloss | Gloss | Gloss | Gloss | Gloss | Gloss | Matte |
| | 60° gloss of the cured object (layer) of the composition B on the topmost layer | | 91 | 90 | 90 | 91 | 91 | 91 | 91 |
| Evaluation results | Initial scratch resistance | | S | S | S | S | A | A | S |
| | Scratch resistance | Hot water (90°C) | S | B | C | S | C | B | C |
| | | Hot water (80°C) | S | B | C | S | C | B | C |
| | | Ethanol | S | B | C | B | C | B | B |
| | | Alkali | Excellent | Excellent | Good | Excellent | Good | Excellent | Excellent |
| | Discharge stability of the composition A | | Good | Good | Good | Good | Good | Good | Good |

**Table 12**

| | | | Examples | | | | | | |
|---|---|---|---|---|---|---|---|---|---|
| | | | 29 | 30 | 31 | 32 | 33 | 34 | 35 |
| Composition A | Type | | A-15 | A-16 | A-17 | A-15 | A-1 | A-1 | A-1 |
| | Printing method | | Matte | Matte | Matte | Gloss | Gloss | Gloss | Gloss |
| | 60° gloss of cured object (layer) | | 20 | 20 | 20 | 87 | 92 | 92 | 92 |
| Composition B | Type (in an order from the top layer to the vicinity of the composition A layer) | | B-3 | B-2 | B-2 | B-3 | B-1 | B-2 | B-3 |
| | | | B-2 | B-1 | B-1 | B-2 | B-1 | B-2 | B-3 |
| | | | B-1 | - | - | B-1 | B-1 | B-2 | B-3 |
| | Printing method of the composition B on the topmost layer | | Matte | Matte | Matte | Gloss | Gloss | Gloss | Gloss |
| | 60° gloss of the cured object (layer) of the composition B on the topmost layer | | 91 | 91 | 91 | 91 | 91 | 91 | 91 |
| Evaluation results | Initial scratch resistance | | S | S | S | S | S | S | S |
| | Scratch resistance | Hot water (90°C) | A | B | A | A | S | S | S |
| | | Hot water (80°C) | A | B | S | A | S | S | S |
| | | Ethanol | A | B | S | S | S | S | S |
| | | Alkali | Excellent | Good | Excellent | Excellent | Excellent | Excellent | Excellent |
| | Discharge stability of the composition A | | Good | Good | Good | Good | Good | Good | Good |

**Table 13**

| | | | Examples | | | |
|---|---|---|---|---|---|---|
| | | | 36 | 37 | 38 | 39 |
| Composition A | Type | | A-21 | A-22 | A-23 | A-1 |
| | Printing method | | Gloss | Gloss | Gloss | Gloss |
| | 60° gloss of cured object (layer) | | 92 | 92 | 92 | 92 |
| Composition B | Type (in an order from the top layer to the vicinity of the composition A layer) | | B-3 | B-3 | B-3 | B-11 |
| | | | B-2 | B-2 | B-2 | - |
| | | | B-1 | B-1 | B-1 | - |
| | Printing method of the composition B on the topmost layer | | Gloss | Gloss | Gloss | Gloss |
| | 60° gloss of the cured object (layer) of the composition B on the topmost layer | | 91 | 91 | 91 | 90 |
| Evaluation results | Initial scratch resistance | | S | S | S | S |
| | Scratch resistance | Hot water (90°C) | S | S | S | B |
| | | Hot water (80°C) | S | S | S | B |
| | | Ethanol | S | S | S | B |
| | | Alkali | Excellent | Excellent | Excellent | Excellent |
| | Discharge stability of the composition A | | Good | Fair | Fair | Good |

**Table 14**

| | | | Comparative Examples | | | | | |
|---|---|---|---|---|---|---|---|---|
| | | | 1 | 2 | 3 | 4 | 5 | 6 |
| Composition A | Type | | A-1 | - | A-18 | A-19 | A-20 | A-1 |
| | Printing method | | Gloss | - | Gloss | Gloss | Gloss | Gloss |
| | 60° gloss of cured object (layer) | | 92 | - | 90 | 90 | 92 | 92 |
| Composition B | Type (in an order from the top layer to the vicinity of the composition A layer) | | - | B-3 | B-3 | B-3 | B-3 | - |
| | | | - | B-2 | B-2 | B-2 | B-2 | - |
| | | | - | B-1 | B-1 | B-1 | B-1 | B-10 |
| | Printing method of the composition B on the topmost layer | | - | Gloss | Gloss | Gloss | Gloss | Gloss |
| | 60° gloss of the cured object (layer) of the composition B on the topmost layer | | - | 91 | 91 | 91 | 91 | 90 |
| Evaluation results | Initial scratch resistance | | C | D | C | C | C | C |
| | Scratch resistance | Hot water (90°C) | D | D | D | D | D | D |
| | | Hot water (80°C) | D | D | D | D | D | D |
| | | Ethanol | D | A | A | A | A | D |
| | | Alkali | Excellent | Poor | Poor | Poor | Poor | Excellent |
| | Discharge stability of the composition A | | Good | - | Good | Good | Good | Good |

Regarding the evaluation of the scratch resistance after immersion in ethanol, in Examples, immersion in 50%-ethanol aqueous solution is described, but 30%-ethanol aqueous solution and 70%-ethanol aqueous solution also showed the same result as in 50%-ethanol aqueous solution.

## Claims

1. An image forming method comprising:
applying, on a base, an active energy ray-curable composition A containing a polymerizable monomer having a phosphoric ester group and a polyester resin;
curing the active energy ray-curable composition A;
applying, on a cured object of the active energy ray-curable composition A, an active energy ray-curable composition B containing a multifunctional polymerizable compound having two or more polymerizable functional groups in its molecule; and
curing the active energy ray-curable composition B.

2. The image forming method according to claim 1, wherein
the active energy ray-curable composition A further contains a multifunctional polymerizable compound having two or more polymerizable functional groups in its molecule; and
a proportion of the multifunctional polymerizable compound in the active energy ray-curable composition A is 25% by mass or less.

3. The image forming method according to claim 1 or 2, wherein the polyester resin comprises a polyester resin having unsaturated bonds.

4. The image forming method according to any one of claims 1 to 3, wherein a proportion of the polyester resin in the active energy ray-curable composition A is 3% by mass or more and 15% by mass or less.

5. The image forming method according to any one of claims 1 to 4, wherein the polyester resin has a number average molecular weight of 2,000 or less.

6. The image forming method according to any one of claims 1 to 5, wherein a proportion of the polymerizable monomer having a phosphoric ester group in the active energy ray-curable composition A is 3% by mass or more and 10% by mass or less.

7. The image forming method according to any one of claims 1 to 6, wherein the polymerizable monomer having a phosphoric ester group comprises a multifunctional monomer having two or more polymerizable functional groups in its molecule.

8. The image forming method according to claim 7, wherein the multifunctional monomer has three polymerizable functional groups in its molecule.

9. The image forming method according to any one of claims 1 to 8, wherein a proportion of the multifunctional polymerizable compound in the active energy ray-curable composition B is 50% by mass or more.

10. The image forming method according to claim 9, wherein the proportion of the multifunctional polymerizable compound in the active energy ray-curable composition B is 60% by mass or more and 80% by mass or less.

11. The image forming method according to any one of claims 1 to 10, wherein the applying the active energy ray-curable composition A and the applying the active energy ray-curable composition B are performed by an inkjet method.

12. The image forming method according to any one of claims 1 to 11, the method further comprising repeating the applying the composition B and the curing the composition B, to form two or more layers each containing a cured object of the active energy ray-curable composition B.

13. The image forming method according to any one of claims 1 to 12, wherein the curing the composition B comprises:
irradiating the active energy ray-curable composition B with an active energy ray 5 seconds or longer after the applying the active energy ray-curable composition B on the cured object of the active energy ray-curable composition A.

14. The image forming method according to any one of claims 1 to 13, wherein the curing the composition A comprises:
irradiating the active energy ray-curable composition A with an active energy ray 5 seconds or longer after the applying the active energy ray-curable composition A on the base.

15. An active energy ray-curable composition set comprising:
an active energy ray-curable composition A containing a polymerizable monomer having a phosphoric ester group and a polyester resin; and
an active energy ray-curable composition B containing a multifunctional polymerizable compound having two or more polymerizable functional group in its molecule.

## Patentansprüche

1. Bilderzeugungsverfahren, Folgendes umfassend:
Auftragen einer durch aktive Energiestrahlen härtbaren Zusammensetzung A, die ein polymerisierbares Monomer mit einer Phosphorsäureestergruppe und ein Polyesterharz enthält, auf eine Basis;
Härten der durch aktive Energiestrahlen härtbaren Zusammensetzung A;
Auftragen einer durch aktive Energiestrahlen härtbaren Zusammensetzung B, die eine multifunktionale polymerisierbare Verbindung mit zwei oder mehr polymerisierbaren funktionalen Gruppen in ihrem Molekül enthält, auf einen gehärteten Gegenstand aus der durch aktive Energiestrahlen härtbaren Zusammensetzung A; und
Härten der durch aktive Energiestrahlen härtbaren Zusammensetzung B.

2. Bilderzeugungsverfahren nach Anspruch 1, wobei
die durch aktive Energiestrahlen härtbare Zusammensetzung A ferner eine multifunktionale polymerisierbare Verbindung enthält, die zwei oder mehr polymerisierbare funktionale Gruppen in ihrem Molekül aufweist; und
ein Anteil der multifunktionalen polymerisierbaren Verbindung in der durch aktive Energiestrahlen härtbaren Zusammensetzung A 25 Massen-% oder weniger beträgt.

3. Bilderzeugungsverfahren nach Anspruch 1 oder 2, wobei das Polyesterharz ein Polyesterharz umfasst, das ungesättigte Bindungen aufweist.

4. Bilderzeugungsverfahren nach einem der Ansprüche 1 bis 3, wobei ein Anteil des Polyesterharzes in der durch aktive Energiestrahlen härtbaren Zusammensetzung A 3 Massen-% oder mehr und 15 Massen-% oder weniger beträgt.

5. Bilderzeugungsverfahren nach einem der Ansprüche 1 bis 4, wobei das Polyesterharz ein zahlenmittleres Molekulargewicht von 2 000 oder weniger aufweist.

6. Bilderzeugungsverfahren nach einem der Ansprüche 1 bis 5, wobei ein Anteil des polymerisierbaren Monomers, das eine Phosphorsäureestergruppe aufweist, in der durch aktive Energiestrahlen härtbaren Zusammensetzung A 3 Massen-% oder mehr und 10 Massen-% oder weniger beträgt.

7. Bilderzeugungsverfahren nach einem der Ansprüche 1 bis 6, wobei das polymerisierbare Monomer, das eine Phosphorsäureestergruppe aufweist, ein multifunktionales Monomer mit zwei oder mehr polymerisierbaren funktionalen Gruppen in seinem Molekül umfasst.

8. Bilderzeugungsverfahren nach Anspruch 7, wobei das multifunktionale Monomer drei polymerisierbare funktionale Gruppen in seinem Molekül aufweist.

9. Verfahren zur Bilderzeugung nach einem der Ansprüche 1 bis 8, wobei ein Anteil der multifunktionalen polymerisierbaren Verbindung in der durch aktive Energiestrahlen härtbaren Zusammensetzung B 50 Massen-% oder mehr beträgt.

10. Verfahren zur Bilderzeugung nach Anspruch 9, wobei der Anteil der multifunktionalen polymerisierbaren Verbindung in der durch aktive Energiestrahlen härtbaren Zusammensetzung B 60 Massen-% oder mehr und 80 Massen -% oder weniger beträgt.

11. Bilderzeugungsverfahren nach einem der Ansprüche 1 bis 10, wobei das Aufbringen der durch aktive Energiestrahlen härtbaren Zusammensetzung A und das Aufbringen der durch aktive Energiestrahlen härtbaren Zusammensetzung B durch ein Tintenstrahlverfahren durchgeführt werden.

12. Bilderzeugungsverfahren nach einem der Ansprüche 1 bis 11, wobei das Verfahren ferner die Wiederholung des Auftragens der Zusammensetzung B und des Aushärtens der Zusammensetzung B umfasst, um zwei oder mehr Schichten zu bilden, die jeweils ein gehärtetes Objekt der durch aktive Energiestrahlen härtbaren Zusammensetzung B enthalten.

13. Bilderzeugungsverfahren nach einem der Ansprüche 1 bis 12, wobei das Aushärten der Zusammensetzung B Folgendes umfasst:
Bestrahlen der durch aktive Energiestrahlen härtbaren Zusammensetzung B mit einem aktiven Energiestrahl 5 Sekunden oder länger nach dem Auftragen der durch aktive Energiestrahlen härtbaren Zusammensetzung B auf das gehärtete Objekt der durch aktive Energiestrahlen härtbaren Zusammensetzung A.

14. Bilderzeugungsverfahren nach einem der Ansprüche 1 bis 13, wobei das Aushärten der Zusammensetzung A Folgendes umfasst:
Bestrahlen der durch aktive Energiestrahlen härtbaren Zusammensetzung A mit einem aktiven Energiestrahl 5 Sekunden oder länger nach dem Auftragen der durch aktive Energiestrahlen härtbaren Zusammensetzung A auf die Basis.

15. Satz von durch aktive Energiestrahlen härtbaren Zusammensetzungen, Folgendes umfassend:
eine durch aktive Energiestrahlen härtbare Zusammensetzung A, die ein polymerisierbares Monomer, das eine Phosphorsäureestergruppe aufweist, und ein Polyesterharz enthält; und
eine durch aktive Energiestrahlen härtbare Zusammensetzung B, die eine multifunktionale polymerisierbare Verbindung enthält, die zwei oder mehr polymerisierbare funktionale Gruppen in ihrem Molekül aufweist.

## Revendications

1. Procédé de formation d'image comprenant :
l'application, sur une base, d'une composition durcissable par rayonnement d'énergie active A contenant un monomère polymérisable comportant un groupe ester phosphorique et une résine polyester ;
le durcissement de la composition durcissable par rayonnement d'énergie active A ;
l'application, sur un objet durci de la composition durcissable par rayonnement d'énergie active A, d'une composition durcissable par rayonnement d'énergie active B contenant un composé polymérisable multifonctionnel comportant deux groupes fonctionnels polymérisables ou plus dans sa molécule ; et
le durcissement de la composition durcissable par rayonnement d'énergie active B.

2. Procédé de formation d'image selon la revendication 1, dans lequel
la composition durcissable par rayonnement d'énergie active A contient en outre un composé polymérisable multifonctionnel comportant deux groupes fonctionnels polymérisables ou plus dans sa molécule ; et
une proportion du composé polymérisable multifonctionnel dans la composition durcissable par rayonnement d'énergie active A est de 25 % en masse ou moins.

3. Procédé de formation d'image selon la revendication 1 ou 2, dans lequel la résine polyester comprend une résine polyester comportant des liaisons non saturées.

4. Procédé de formation d'image selon l'une quelconque des revendications 1 à 3, dans lequel une proportion de la résine polyester dans la composition durcissable par rayonnement d'énergie active A est de 3 % en masse ou plus et de 15 % en masse ou moins.

5. Procédé de formation d'image selon l'une quelconque des revendications 1 à 4, dans lequel la résine polyester présente un poids moléculaire moyen en nombre de 2 000 ou moins.

6. Procédé de formation d'image selon l'une quelconque des revendications 1 à 5, dans lequel une proportion du monomère polymérisable comportant un groupe ester phosphorique dans la composition durcissable par rayonnement d'énergie active A est de 3 % en masse ou plus et de 10 % en masse ou moins.

7. Procédé de formation d'image selon l'une quelconque des revendications 1 à 6, dans lequel le monomère polymérisable comportant un groupe ester phosphorique comprend un monomère multifonctionnel comportant deux groupes fonctionnels polymérisables ou plus dans sa molécule.

8. Procédé de formation d'image selon la revendication 7, dans lequel le monomère multifonctionnel comporte trois groupes fonctionnels polymérisables dans sa molécule.

9. Procédé de formation d'image selon l'une quelconque des revendications 1 à 8, dans lequel une proportion du composé polymérisable multifonctionnel dans la composition durcissable par rayonnement d'énergie active B est de 50 % en masse ou plus.

10. Procédé de formation d'image selon la revendication 9, dans lequel la proportion du composé polymérisable multifonctionnel dans la composition durcissable par rayonnement d'énergie active B est de 60 % en masse ou plus et de 80 % en masse ou moins.

11. Procédé de formation d'image selon l'une quelconque des revendications 1 à 10, dans lequel l'application de la composition durcissable par rayonnement d'énergie active A et l'application de la composition durcissable par rayonnement d'énergie active B sont réalisées au moyen d'un procédé par j et d'encre.

12. Procédé de formation d'image selon l'une quelconque des revendications 1 à 11, le procédé comprenant en outre la répétition de l'application de la composition B et du durcissement de la composition B pour former deux couches ou plus dont chacune contient un objet durci de la composition durcissable par rayonnement d'énergie active B.

13. Procédé de formation d'image selon l'une quelconque des revendications 1 à 12, dans lequel le durcissement de la composition B comprend :
l'irradiation de la composition durcissable par rayonnement d'énergie active B à l'aide d'un rayonnement d'énergie active pendant 5 secondes ou plus longtemps après l'application de la composition durcissable par rayonnement d'énergie active B sur l'objet durci de la composition durcissable par rayonnement d'énergie active A.

14. Procédé de formation d'image selon l'une quelconque des revendications 1 à 13, dans lequel le durcissement de la composition A comprend :
l'irradiation de la composition durcissable par rayonnement d'énergie active A à l'aide d'un rayonnement d'énergie active pendant 5 secondes ou plus longtemps après l'application de la composition durcissable par rayonnement d'énergie active A sur la base.

15. Ensemble de compositions durcissables par rayonnement d'énergie active comprenant :
une composition durcissable par rayonnement d'énergie active A contenant un monomère polymérisable comportant un groupe ester phosphorique et une résine polyester ; et
une composition durcissable par rayonnement d'énergie active B contenant un composé polymérisable multifonctionnel comportant deux groupes fonctionnels polymérisables ou plus dans sa molécule.
